# EUROPEAN PATENT SPECIFICATION

(11) **EP 4 013 120 B1**
(45) Date of publication and mention of the grant of the patent: **26.11.2025**
(21) Application number: 20868485.2
(22) Date of filing: 27.09.2020
(51) Int. Cl.: H04W 40/34

(54) **ELECTRONIC DEVICE AND SYSTEM AND METHOD FOR WIRELESS COMMUNICATIONS**
ELEKTRONISCHE VORRICHTUNG UND SYSTEM UND VERFAHREN FÜR DRAHTLOSKOMMUNIKATIONEN
DISPOSITIF ÉLECTRONIQUE ET SYSTÈME ET PROCÉDÉ POUR COMMUNICATIONS SANS FIL

(30) Priority: 29.09.2019 CN 201910935566
(43) Date of publication of application: 15.06.2022
(73) Proprietor: Sony Group Corporation, Tokyo 108-0075 (JP)
(72) Inventor: LIU, Min, Beijing 100028 (CN); SUN, Chen, Beijing 100028 (CN); WU, Zhikun, Beijing 100028 (CN)
(74) Representative: D Young & Co LLP
(86) International application number: PCT/CN2020/117966
(87) International publication number: WO 2021/057938

(56) References cited:
- WO-A1-2018/082645
- WO-A1-2019/156528
- CN-A- 104 936 292
- CN-A- 108 696 935
- CN-A- 109 391 667
- US-A1- 2016 295 624
- US-A1- 2017 332 352
- US-A1- 2020 059 896
- ASUSTEK: "Discussion on scenarios for applying exceptional pool", vol. RAN WG2, no. Reno, USA; 20190513 - 20190517, 13 May 2019 (2019-05-13), XP051730003, Retrieved from the Internet <URL:http://www.3gpp.org/ftp/Meetings%5F3GPP%5FSYNC/RAN2/Docs/R2%2D1906542%2Ezip> [retrieved on 20190513]

## Description

### FIELD OF THE INVENTION

The present disclosure relates to a terminal side electronic device, a wireless communication system and a method for communication when transmission resources change/switch.

### BACKGROUND

With the development of wireless communication technology and the rapid growth of automobiles, intelligent transportation has attracted increasing attention and developed rapidly. V2X (Vehicle-to-Everything) networking technology is a key technology of an intelligent transportation system in the future. It enables vehicle-to-vehicle communication, vehicle-to-base station communication and base station-to-base station communication, and obtains a series of traffic information such as real-time road conditions, road information and pedestrian information, thus improving driving safety, reducing congestion, improving traffic efficiency and providing on-board entertainment information, etc. In particular, traffic accidents caused by automobiles occur frequently. In order to avoid more huge losses caused by traffic accidents, V2X networking can provide safety warning for vehicles, avoid congested and dangerous road sections, improve driving safety and reduce traffic accidents.

Among current V2X technologies, LTE-V2X technology is a mainstream technology, which can acquire safer, more reliable and more efficient communication capabilities in the state of high-speed movement, and can effectively utilize related resources.

With the development of communication technology, as well as the research and standardization related to 5G-NR(New Radio), NR-V2X has also become a hot research issue.

Unless otherwise stated, it should not be assumed that any of the methods described in this section become prior art only because they are included in this section. Similarly, unless otherwise stated, the problems recognized about one or more methods should not be assumed to be recognized in any prior art on the basis of this section.

Prior art includes: WO 2019/156528A1. This prior art document describes a prior art device.

### DISCLOSURE OF THE INVENTION

The present disclosure provides a terminal side electronic device, a system and a method for communicating in a wireless communication system when transmission resources change/switch, which can improve communication reliability in the wireless communication system, especially in V2X under 5G communication technology.

The invention is defined by the appended claims.

### DESCRIPTION OF THE DRAWINGS

The above and other objects and advantages of the present disclosure will be further described below with reference to specific embodiments and drawings. In the drawings, the same or corresponding technical features or components will be denoted by the same or corresponding reference numerals.
Fig. 1 shows a block diagram of a terminal-side electronic device according to an embodiment of the present disclosure.
Fig. 2 shows a schematic diagram of data traffic of the terminal-side electronic device according to an embodiment of the present disclosure.
Fig. 3 is a schematic diagram illustrating that a terminal-side electronic device adopts both a first transmission mode and a second transmission mode for data transmission during handover, according to an embodiment of the present disclosure.
Fig. 4 is a schematic diagram illustrating that the aperiodic data traffic with high priority occupy resources of the periodic data traffic with low priority when the terminal-side electronic device performs handover, according to an embodiment of the present disclosure.
Fig. 5 is a schematic diagram illustrating that a terminal-side electronic device adopts a second transmission mode for data transmission during handover, according to an embodiment of the present disclosure.
Fig. 6 is a signaling interaction diagram of the terminal-side electronic device in the RRC_CONNECTED second transmission mode at handover, according to the embodiment of the present disclosure.
Fig. 7 shows the signaling interaction diagram of the terminal-side electronic device in the RRC _CONNECTED second transmission mode after the handover completes and before available channel resources are detected, according to the embodiment of the present disclosure.
Fig. 8 shows the signaling interaction diagram of the terminal-side electronic device in the RRC_CONNECTED second transmission mode when performing mode switching during transmission resource pool switching, according to the embodiment of the present disclosure.
Fig. 9 shows a flowchart of a communication method for a terminal-side electronic device according to an exemplary embodiment of the present disclosure.
Fig. 10 shows a communication flow chart of a terminal-side electronic device at handover according to an embodiment of the present disclosure.
Fig. 11 shows a communication flow chart of the terminal-side electronic device in the RRC_CONNECTED second transmission mode from handover to detection of available channel resources, according to an embodiment of the present disclosure.
Fig. 12 shows a block diagram of a control-side electronic device according to an embodiment of the present disclosure.
Fig. 13 shows a flowchart of a communication method for a control-side electronic device according to an embodiment of the present disclosure.
FIG. 14 is a block diagram of an exemplary structure of a personal computer as an information processing device that can be employed in an embodiment of the present disclosure.
FIG. 15 is a block diagram illustrating a first example of a schematic configuration of an eNB to which the technology of the present disclosure can be applied.
FIG. 16 is a block diagram illustrating a second example of a schematic configuration of an eNB to which the technology of the present disclosure can be applied.
FIG. 17 is a block diagram illustrating an example of a schematic configuration of a smartphone to which the technology of the present disclosure can be applied; and
FIG. 18 is a block diagram illustrating an example of a schematic configuration of a vehicle navigation device to which the technology of the present disclosure can be applied.

### DETAILED DESCRIPTION OF PREFERRED EMBODIMENTS

Hereinafter, exemplary embodiments of the present disclosure will be described with reference to the accompanying drawings. For the sake of clarity and conciseness, not all features of the embodiments are described in the description. However, it should be understood that many implementation-specific settings must be made during the implementation of the embodiments in order to achieve specific goals of developers, for example, to meet those constraints related to equipment and business, and these constraints may vary with different implementations. In addition, it should be understood that although the development work may be very complicated and time-consuming, it is only a routine task for those skilled in the art who benefit from this disclosure.

Here, it should also be noted that in order to avoid obscuring the present disclosure by unnecessary details, only processing steps and/or equipment structures closely related to the solutions at least according to the present disclosure are shown in the drawings, while other details not closely related to the present disclosure are omitted.

V2X (Vehicle-to-Everything) communication is one of the most promising motivating factors for an intelligent transportation system, and in the V2X communication, latency and reliability are the main concerns. Especially, in some special application scenarios, it needs to perform temporary communication to ensure the reliability of communication. These application scenarios may include scenarios in which the transmission resources adopted by the client equipment (UE) for data communciation with the cell base station change/switch, which may occur, for example, when the UE performs cell handover (that is, when switching from the current serving cell to a target cell), when the network Radio Resource Control (RRC) protocol is reconfigured (that is, when the transmission resources configured by the cell base station change), and so on. It should be noted that the change/switching of transmission resources may include the change/switching of a transmission resource pool.

For V2X sidelink transmission, during the switching, the configuration of transmission resource pool including an exceptional transmission resource pool for the target cell can be signaled in the handover command to reduce the transmission interruption. In the traditional LTE-V2X scheme, when an exceptional situation occurs, for example, when the transmission resource pool for RRC_CONNECTED UE changes/switches, an exceptional resource pool is often used for temporary communication. UE can randomly select resources from the exceptional resource pool provided by the serving cell or in dedicated signaling, and temporarily use them for temporary communication.

Specifically, in LTE-V2X, two types of resource configuration modes are defined. A first transmission mode (e.g., V2X transmission mode 1 or sidelink transmission mode 3) is a transmission resource configuration mode scheduled by the base station, in which the terminal equipment UE adopts dedicated transmission resources configured by the cell base station for the UE to perform transmission, for example, the base station employs **sidelink grant** to instruct UE to use the corresponding resources for transmission. A second transmission mode (e.g. V2X transmission mode 2 or sidelink transmission mode 4) is a mode in which the UE selects the transmission resources spontaneously, in which the UE spontaneously selects available resources from the resource pool configured by the cell base station for transmission. In the design of LTE-V2X (Release 14-16), in order to solve the problem of temporary communication in the case of handover, the exceptional resource pool used for D2D exceptional communication was introduced into the related design of LTE-V2X. Taking handover as an example:
1) For the RRC_CONNECTED UE in the first transmission mode, if an exceptional transmission resource pool is configured for the target cell in the handover command (HO command), upon receiving the handover command, the UE will randomly select resources from the resource pool and transmit data, until the end of the timing.
2) For the RRC_CONNECTED UE in the second transmission mode, if the exceptional transmission resource pool is configured for the target cell in the handover command, upon receiving the handover command, the UE will randomly select resources from the resource pool and transmit data, until available resources are detected on a V2X transmission resource pool for the target cell.

It can be seen that at present, the exceptional resource pool is mainly used for data transmission in transmission resource change/switching scenarios. Particularly, only resources are randomly selected from the exceptional resource pool for data transmission. However, the configuration of resources from the exceptional resource pool only adopts the method of random resource selection, which easily causes collision problems, and reduces the communication reliability.

With the development of NR-V2X standardization, NR-V2X system has put forward higher requirements for transmission data rate and transmission reliability, some traffics in NR-V2X need high reliability, even up to 99.999% reliability, but the above communication methods may not be applicable. Therefore, it is necessary to propose an improved communication technology to further improve the reliability of communication in NR-V2X.

According to one aspect of the present disclosure, considering that there usually contains different types of data in NR-V2X, and the reliability and priority of such data are also different, it is necessary to select an appropriate transmission mode for the data to be transmitted, so as to better meet the data transmission requirements and improve the data transmission reliability.

According to another aspect of the present disclosure, considering that the random resource selection method may easily cause collision problems in the use of exceptional resource pools, it is necessary to further reduce the use of exceptional resource pools for improving the system reliability.

**In** view of the above, the present disclosure proposes a communication technology when there occurs transmission resource change/switching in V2X or similar communication system (such as unmanned aerial vehicle (UAV) communication). Among them, the client equipment (UE) can select an appropriate transmission mode based on information about data transmission to be carried out and adopt corresponding transmission resources to carry out the data transmission, so that appropriate transmission modes can be applied to various types of data transmission, and the transmission interruption can be reduced while the reliability can be improved. Preferably, for data traffic with high reliability requirements, high priority and of specific types (such as periodic data traffic), a first transmission mode with high reliability in which communication is performed based on dedicated resources configured by the base station, such as V2X transmission mode 1 or sidelink transmission mode 3, can be applied. For other types of data traffic, a second transmission mode in which the communication can be performed based on an exceptional resource pool, such as V2X transmission mode 2 or sidelink transmission mode 4, can be applied, so that data transmission can be optimized and reliability can be improved.

Especially, when the transmission resources change/switch, the present disclosure can adopt a first transmission mode with high reliability in which communication is performed based on dedicated resources configured by the base station for data transmission as much as possible, regardless of the transmission mode before the transmission resources change/switch, which can further reduce the usage of exceptional resources and further improve the reliability. Preferably, in a case that the transmission mode before the transmission resource change/switch is the second transmission mode, the present disclosure can adopt the first transmission mode when the transmission resources change/switch, as well as after the transmission resource change/switch and before available channel resources are detected, thereby further improving the reliability.

The implementation of this disclosure will be described mainly with respect to an application scenario of V2X. It should be pointed out that the application scenario of V2X is only exemplary, and the technology of this disclosure can also be applied to other similar application scenarios, such as scenarios where communication resources between mobile devices and other devices in a communication system may change/switch, such as unmanned aerial vehicles, robots and other application scenarios.

The technical scheme of the present disclosure is suitable for a case that when the transmission resources change/switch in V2X, UE keeps RRC_CONNECTED with the base station of the original serving cell or the current serving cell for a period of time, so as to adjust and change the communication mode in this state (RRC_CONNECTED state). The RRC_CONNECTED time period is not particularly limited, and it can usually be up to a period during which at least the information about the transmission resources allocated by the base station of the serving cell can be received so that it is possible to use the resources for data transmission and communication connection, for example, it can be up to several seconds to tens of seconds.

Particularly, at handover, the UE keeps RRC_CONNECTED with the base station of the original serving cell for a period of time in order to realize handover to a target cell. It should be noted that in the handover scenario, the target cell can also be called a new serving cell. Of course, during handover, this RRC connection is not seamlessly maintained, and after the UE accepts the handover command from the original cell, RRC will be in a disconnected mode; when the UE and the target cell complete the random access, the RRC_CONNECTED state will continue to be maintained, which is the RRC connection with the target cell at this time. When the network-configured transmission resources change, the UE keeps RRC_CONNECTED with the base station of the current serving cell for a period of time, until the data communication connection with the base station of the serving cell is re-established. For example, after the information about resources configured by the base station of the current serving cell is received, RRC can be in the disconnected mode, and after the connection with the base station of the cell is re-established, RRC connection is maintained again. Therefore, unless otherwise indicated or specified, the following description of the exemplary embodiments of the present disclosure is based on a fact that the UE is temporarily in RRC_CONNECTED state when the transmission resources change/switch.

According to the embodiment of the present disclosure, when the transmission resources change/switch, the UE receives the relevant information about the transmission resources allocated by the base station of the serving cell through RRC connection, and according to the specific application scenario, the relevant information can be provided to the UE via the base station of the original cell (source base station), for example, in the scenario of cell handover, or provided to the UE by the base station of the serving cell, for example, in the scenario of network configuration resources changing. The relevant information can be transmitted through RRC messages such as RRCConnectionReconfiguration message and RRCReconfiguration message, or by signaling, protocols, forms and the like known in the art.

Exemplary embodiments of the technology of the present disclosure will be described in detail below with reference to the accompanying drawings.

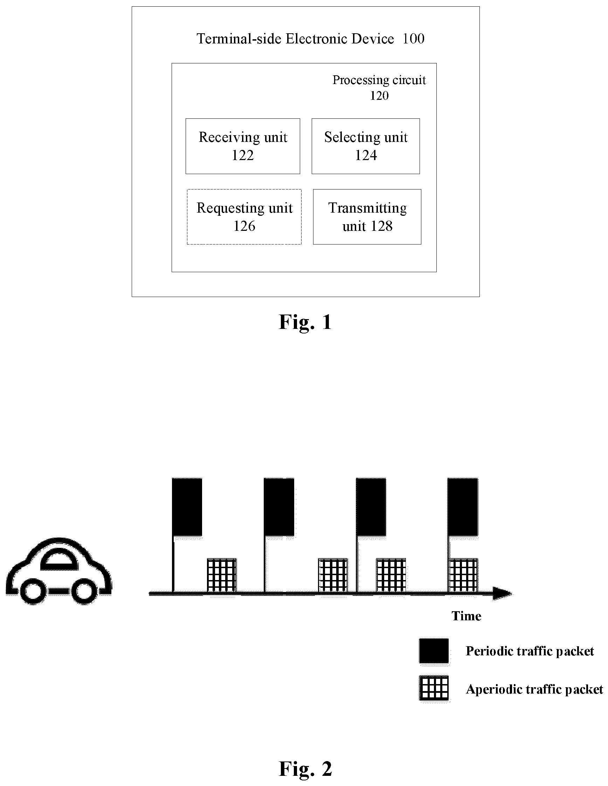

Fig. 1 shows a terminal-side electronic device 100 in a wireless communication system according to an exemplary embodiment of the present disclosure, which can transmit data to a control-side electronic device in the wireless communication system.

In this disclosure, the terminal-side electronic device may refer to the client equipment (UE) of the wireless communication system, such as vehicles in V2X, unmanned aerial vehicles, robots and the like in similar application scenarios. In the present disclosure, "control-side electronic device" has the full breadth of its common meaning, for example, it can include a device that is a part of a wireless communication system or a radio system to facilitate resource allocation. In some embodiments, the control-side electronic device can be configured to communicate with the terminal-side electronic device through wireless communication technologies such as 4G and 5G. For example, the information about the resource configuration can be transmitted to the terminal-side electronic device via 4G link, 5G link or other links in the field, which will not be described in detail here.

In some embodiments, the control-side electronic device may be a base station (e.g., gNB) of a serving cell serving the client device in the wireless communication system, such as a cell base station in V2X, etc. In this disclosure, the term "base station" has the full breadth of its common meaning, and at least includes a wireless communication station which is a part of a wireless communication system or a radio system to facilitate communication. As an example, the base station may be, for example, an eNB in a 4G communication standard, a gNB in a 5G communication standard, a remote radio head, a wireless access point, an unmanned aerial vehicle control tower, or a communication device that performs similar functions.

The terminal-side electronic device further includes a processing circuit 120, which is configured to select at least one of a first transmission mode and a second transmission mode for data transmission based on relevant information about data transmission from the terminal-side electronic device, when transmission resources adopted by the terminal-side electronic device for data transmission change, wherein the first transmission mode has a higher reliability than that of the second transmission mode, and wherein the relevant information includes at least one of type, reliability requirement and priority of the Pdata transmission traffic. It should be noted that the terminal-side electronic device can also be realized as the processing circuit itself.

Preferably, according to the embodiment of the present disclosure, in the first transmission mode, the terminal-side electronic device adopts dedicated resources configured by the control-side electronic device for the terminal-side electronic device to transmit data; and in the second transmission mode, the terminal-side electronic device adopts a resource pool allocated by the control-side electronic device and shared by the terminal-side electronic device and other terminal-side electronic devices to transmit data. Particularly, the resource pool shared by the terminal-side electronic device and other terminal-side electronic devices refers to a common resource pool allocated by the control-side electronic device, in which the terminal-side electronic device makes selection spontaneously for transmission.

According to an embodiment of the present disclosure, the shared resource pool configured for the second transmission mode may refer to an exceptional resource pool for a cell. Therefore, in the second transmission mode, the terminal-side electronic device can spontaneously select available resources from the exceptional resource pool to transmit data. Optionally, the dedicated resources configured for the first transmission mode can be selected from a normal resource pool for the cell.

Therefore, the UE selects an appropriate transmission mode for data transmission according to the relevant information about data transmission. For example, only the first transmission mode, only the second transmission mode, and a combination of the first and second transmission modes may be adopted. It should be noted that the relevant information about data transmission is the information that the UE itself knows before/when data transmission is to be performed, and the UE itself determines the transmission mode according to the relevant information about data transmission to be performed and/or the assistance of the base station.

According to an embodiment of the present disclosure, the processing circuit is further configured to adopt the first transmission mode for data transmission, for at least one of a data transmission traffic whose reliability requirement meets certain conditions, such as higher than a certain threshold value, a data transmission traffic whose priority meets certain conditions, such as higher than a certain threshold value, and a specific type (such as periodic) data traffic. It should be noted that the above-mentioned specific threshold value can be set according to various ways and standards, for example, it can be set according to statistical information of historical data transmission, user settings, etc. Therefore, for data traffics with high reliability requirements, with high priorities and of specific types (such as periodic), it can be selected that the dedicated resources configured by the base station of the serving cell can be adopted according to the first transmission mode, so as to avoid the collision problem in the exceptional resource pool, thereby effectively transmitting data and improving the reliability. As an example, when the data transmission only includes the above data transmission traffics, it can be considered that only the first transmission mode can be adopted for data transmission.

According to an embodiment of the present disclosure, the processing circuit is further configured to use the second transmission mode for data transmission for at least one of a data transmission traffic with reliability requirement lower than a specific threshold, a data transmission traffic with priority lower than a specific threshold and an aperiodic data traffic. Therefore, for data traffics with low reliability requirements, with low priorities and of aperiodic nature, it can be selected that the resources in an exceptional resource pool configured by the base station of the serving cell can be adopted according to the second transmission mode, considering the low data transmission requirements of such data traffics, even if there occurs a collision problem in the exceptional resource pool, the impact on the communication reliability of the system is not great. Especially, for such types of data, especially for aperiodic traffic, it is difficult to predict the arrival time and size of data, and it is impossible to configure relevant dedicated transmission resources in HO(HandOver) command in advance. Moreover, by using resources randomly selected from the exceptional resource pool for data transmission, the configuration of dedicated resources can be avoided, and the overhead of system communication can be reduced to a certain extent. As an example, this type of data traffic, especially aperiodic traffic, can not only include traffics in which the period and size of transmitted data packets significantly change, but also include real-time communication traffics triggered by unpredictable events. As an example, when the data transmission only includes the above data transmission traffics, it can be considered that only the second transmission mode is adopted for data transmission.

As an example, the above two situations can be combined, so that the first and second transmission modes can be used for data transmission, so that the transmission of various types of data can be optimized, the transmission efficiency can be improved, and the transmission reliability will not be influenced.

According to embodiments of the present disclosure, data transmission may include both periodic data traffics and aperiodic data traffics. Particularly, NR-V2X contains not only periodic traffics but also aperiodic traffics, as shown in Figure 2. Therefore, in data transmission, periodic traffics and aperiodic traffics can be performed by utilizing corresponding resources in appropriate transmission modes respectively.

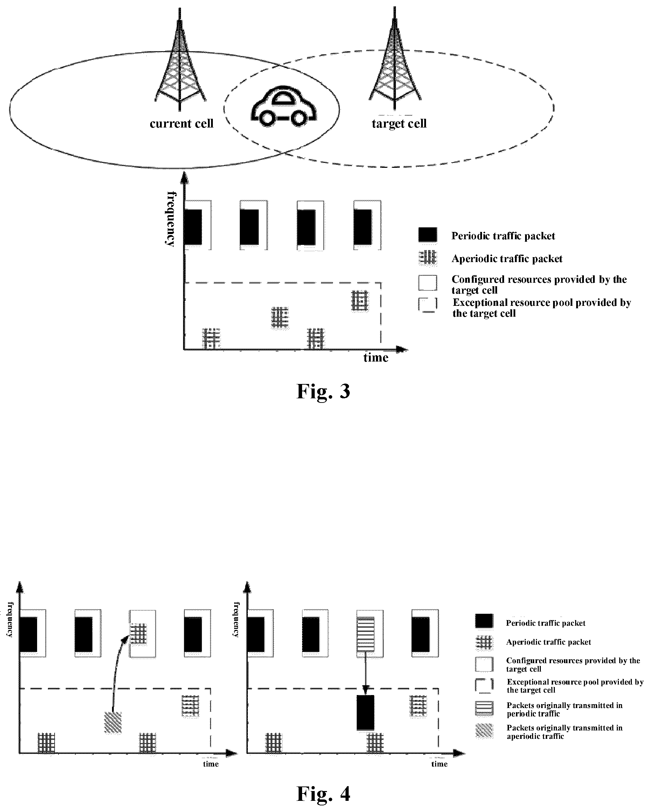

According to the embodiment, different modes can be used for transmiting different types of data traffics. Fig. 3 shows a schematic diagram of a terminal-side electronic device using both a first transmission mode and a second transmission mode for data transmission during handover, according to an embodiment of the present disclosure. For periodic data traffics, the transmission is performed by utilizing the resources dedicated for UE in the above-mentioned first transmission mode, while the resources required by non-periodic traffics cannot be configured in advance, so non-periodic traffics can be transmitted in the exceptional resource pool. Therefore, the transmission of various types of data can be optimized, the transmission efficiency can be improved, and the transmission reliability will not be influenced.

It should be pointed out that in this case, the base station of the source cell can include the configuration information for both dedicated resources and exceptional resource pools in the HO command. The request and configuration for resources can be realized in many ways. Particularly, according to one implementation, the UE can request the base station of the target cell for which traffics require dedicated resources and which traffics require the exceptional resource pool, via the base station of source cell according to the relevant information about the transmitted data,so that the base station of the target cell can make corresponding resource configuration according to the received request, and then inform the base station of the source cell of the configuration information, and then inform the UE via the HO command. In this way, the UE can perform data transmission according to the resource configuration provided in the HO command from the source base station. According to another implementation, the UE can report the relevant information about data transmission to the base station of the target cell via the base station of the source cell, and then the base station of the target cell can allocate resources for the data traffics according to the received relevant information about data transmission, such as periodic traffics and/or aperiodic traffics, and the acquired parameters related to the UE (for example, it can be known from the base station of the source cell), that is, which traffics require dedicated resources and which traffics require the exceptional resource pool, and then inform the base station of the source cell of the configuration information. In this way, the UE can transmit data according to the resource configuration provided in the HO command from the source base station.

According to an embodiment, in a case that at least one aperiodic data traffic has high priority and/or high reliability requirement, preferably higher than periodic data traffics, the processing circuit is further configured to transmit the at least one aperiodic data traffic in the first transmission mode. Therefore, the data transmission for aperiodic data traffics with high reliability requirements and/or high priorities can be performed by utilizing the dedicated resources configured for periodic data traffics in the first transmission mode, thereby improving the reliability.

According to the embodiments of the present disclosure, if the dedicated resources occupied by aperiodic data traffics with high reliability requirements and/or high priorities are large enough to continue to transmit periodic data traffics, the aperiodic and periodic data traffics both can be transmitted in the dedicated resources in parallel.

According to another embodiment of the present disclosure, the processing circuit may be further configured to transmit periodic data traffics whose transmission resources are occupied by the at least one aperiodic data traffic in a second transmission mode. Particularly, if the dedicated resources occupied by aperiodic data traffics with high reliability requirements and/or high priorities cannot continue to transmit periodic traffic data, it is possible to provide aperiodic resources (e.g., public resources and exceptional resources) for transmitting the periodic traffics whose dedicated transmission resources are occupied. Fig. 4 is a schematic diagram illustrating that the aperiodic data traffics with high priorities occupy resources of periodic data traffics with low priorities when the terminal-side electronic device performs handover, according to an embodiment of the present disclosure. It should be pointed out that even after the above-mentioned change of data transmission resources, the UE can still select appropriate resources for data transmission according to the data ID. For example, when the UE needs to receive data from a source UE, the UE can receive all data packets in a slot, and determine its own data packets according to the destination ID of the data packets, so as to select appropriate resources to transmit the data in the data packets according to the data type.

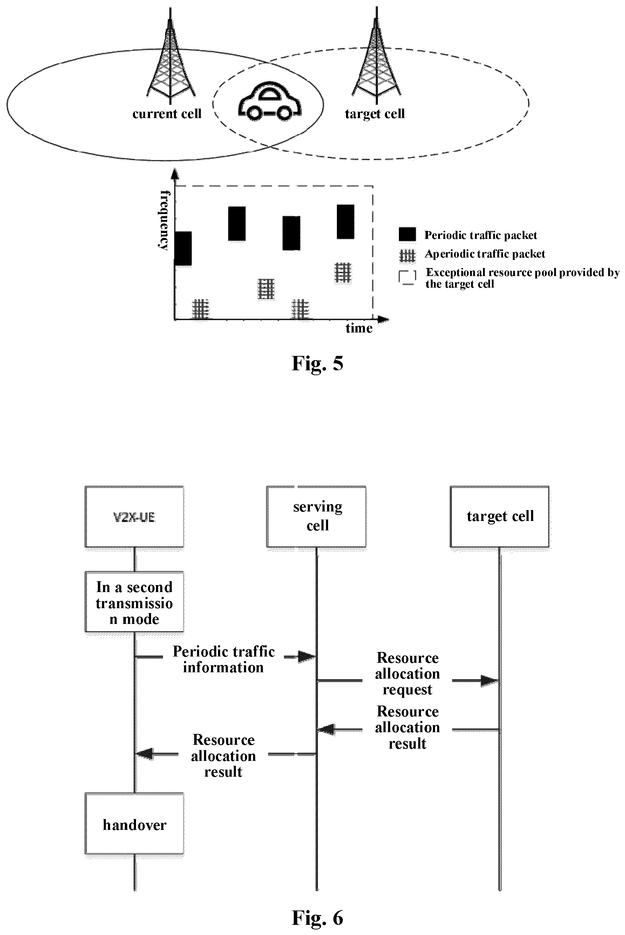

According to the embodiment of the present disclosure, in a case that data transmission includes both periodic data traffics and aperiodic data traffics, the second transmission mode can also be adopted to transmit data by using an exceptional resource pool. This is especially suitable for a case where the reliability requirement of the data transmission traffic is low. Fig. 5 is a schematic diagram illustrating that a terminal-side electronic device adopts a second transmission mode for data transmission during handover, according to an embodiment of the present disclosure, wherein the RRC-connected UE is in the first transmission mode before the handover.

According to an embodiment of the present disclosure, the processing circuit is further configured to receive, from the control-side electronic device, information about transmission resources configured by the control-side electronic device for data transmission, so that the terminal-side electronic device can transmit data according to the transmission resources. It should be noted that the control-side electronic device, such as the source base station or the target base station, can inform the terminal-side electronic device of the resources it has configured for the terminal-side electronic device in various ways such as handover command.

On the one hand, in the case of handover, when the UE keeps RRC connection with the base station of the original cell, the base station of the original cell notifies the UE of this information in the handover command. Specifically, handover means that the UE judges whether to switch a cell according to the connection condition between the UE and the cell, and reports the request to the original serving cell (source cell). The original serving cell makes a request to the target cell, and after agreeing, the target cell transmits relevant information to the base station of the original serving cell through the X2 or Xn interface, wherein the relevant information includes the relevant information about the transmission resources configured by the base station of the target cell for the UE, and the base station of the original serving cell notifies the UE of the above information through a handover command. On the other hand, when the network configured resources change, the base station of the serving cell can use its RRC connection with the UE to inform the UE of the relevant information about transmission resources configured by the serving cell for the UE.

According to an embodiment of the present disclosure, the information about transmission resources includes information about dedicated resources configured for the terminal-side electronic device and/or information about configured resources (e.g., exceptional resources) shared by the terminal-side electronic device and other terminal-side electronic devices.

According to one aspect, the transmission resources allocated by the cell base station can include an exceptional resource pool, and the configuration of the exceptional resource pool can be realized in various ways known in V2X field, which will not be described in detail here. On the other hand, the transmission resources allocated by the cell base station can also include dedicated resources configured for the UE, which can be determined according to relevant information about data transmission to be performed by the UE. The relevant information can be transmitted to the base station of the serving cell in various ways. The relevant information can be transmitted by using signaling, protocols, forms and the like known in the art, specifically, it can be transmitted by using MAC layer signaling such as BSR or transmitted by using RRC layer messages.

Preferably, the period, size, priority and reliability requirements, etc. of the data traffics from the UE can be reported to the cell base station through BSR. For example, in the handover scenario, when the UE reports the base station the RRM measurement results related to the handover, for example, the measurement results of event A3, the UE predicts that the handover may occur, and judges which traffics need to be pre-allocated resources (need to acquire configured grant, i.e., configured resources, such as dedicated resources) during the handover, and then immediately after reporting the RRM measurement results, transmits BSR to the serving base station to inform the period, size and priority (time delay) of the corresponding traffics, so that the serving base station can identify the traffics reported in the BSR needs to request to-be-preallocated resources from the station of the target cell. In the non-handover scenario, the transmission resource pool changes, the serving base station notifies the UE before the change, and the UE judges which traffics need to be preallocated resources (need to obtain the configured grant) during the change, and then transmits the BSR to the serving base station to inform the period, size and priority (time delay) of the corresponding traffics, so that the serving base station can allocate dedicated resources. In another example, when the UE reports the RRM measurement results related to handover to the base station (for example, the measurement results of event A3), it predicts that handover may occur, judges which traffics need to be pre-allocated resources (need to acquire the configured grant) during the handover process, and then notifies the serving base station of the period, size and priority (time delay) of the corresponding traffics by using RRC messages while reporting the RRM measurement results, so that the serving base station can identify that the reported traffic need to request the pre-allocated resources from the base station of the target cell.

As an example, in the case of handover, and in the case of RRC connection, the UE can transmit relevant information to the base station (source base station) of the original serving cell (source cell), and the base station (source base station) of the original serving cell (source cell) can transmit the relevant information to the base station of the target cell. Or, in a case that the base station of the original serving cell (source cell) has previously known the relevant information about the data transmission from the UE, the base station of the original serving cell (source cell) can spontaneously transmit the relevant information to the base station of the target cell during handover. As an example, when the network configuration resources change, the UE can use its RRC connection with the base station of the serving cell to transmit the relevant information about data transmission to the base station of the serving cell.

According to the embodiment of the present disclosure, the dedicated resources configured by the cell base station for the terminal-side electronic device are configured based on the relevant information about the periodic data traffics in data transmission, and the relevant information includes at least one of the periodic information (e.g., time period) and data size of the periodic data traffics. Therefore, the base station of the serving cell, such as the target base station, can configure periodic resources corresponding to the period and size of the periodic data traffics, and in consideration of communication loss and other factors, can set a certain redundancy for the periodic resources during the configuration, so as to enable the periodic data traffic to be safely transmitted in the periodic resources, and even it is possible to accept the aperiodic data traffics with high reliability requirements and/or priorities, as described above.

According to the embodiment of the present disclosure, the relevant information about the periodic data traffic is transmitted to the control-side electronic device, such as the target base station, by the terminal-side electronic device directly or via an additional control-side electronic device, or known in advance by the additional control-side electronic device and provided to the control-side electronic device. It should be pointed out that the control-side electronic device can refer to, for example, a base station of the target cell to which the terminal-side electronic device is intended to be connected, and the additional control-side electronic device can provide communication between the terminal-side electronic device and the control-side electronic device, in particular, the terminal-side electronic device can transmit the relevant information about data transmission, for example, via RRC connection between the terminal-side electronic device and the additional control-side electronic device, while the additional control-side electronic device can receive the configuration information about the control-side electronic device and transmit it to the terminal-side electronic device through the HO command. The additional control-side electronic device includes, but is not limited to, for example, a source base station or a RoadSideUnit (RSU). For a non-handover scenario, the UE can be either an ordinary UE or a UE-type roadside unit; the base station of the current serving cell can be either an ordinary base station or a base station-type RSU. For a handover scenario, the base station of the current serving cell and the base station of the target cell can be either ordinary base stations or base station-type RSUs.

According to an embodiment of the present disclosure, the processing circuit is further configured to select a transmission mode used when the transmission resources change, according to the transmission mode of the terminal-side electronic device before the transmission resources change. Particularly, when the terminal-side electronic device adopts the second transmission mode before the transmission resources change, the processing circuit is further configured to adopt the first transmission mode or the combination of the first and second transmission modes for data transmission when the transmission resources change.

As mentioned above, when the transmission resource pool of the serving cell changes, the RRC_CONNECTED UE in the second transmission mode needs to re-detect the channel resources (the detection process for a period of 1s in LTE, and such detection process is not specified in NR at present). In this process, only the exceptional resource pool can be used to transmit data. At this time, therefore, the UE can be switched to the first transmission mode or the data can be transmitted by utilizing at least the first transmission mode, and the communication reliability during this period can be improved.

Particularly, in this case, the terminal-side electronic device can select an appropriate transmission mode for data transmission according to relevant information about data transmission from the terminal-side electronic device, as described above. In particular, the first transmission mode can be adopted for data transmission, for at least one of a data transmission traffic with reliability requirements higher than a certain threshold, a data transmission traffic with priority higher than a certain threshold and a periodic data traffic, and/or the second transmission mode can be adopted for data transmission for at least one of a data transmission traffic with reliability requirements lower than a certain threshold, a data transmission traffic with priority lower than a certain threshold and an aperiodic data traffic.

As an example, in the case that data transmission includes both periodic data traffics and aperiodic data traffics, the terminal-side electronic device can use the combination of the first transmission mode and the second transmission mode to transmit data, especially, the periodic traffics are transmitted on the configured grant notified by the target cell through the serving cell; the aperiodic traffics are transmitted on the exceptional resource pool notified by the target cell through the serving cell, until the completion of handover, as described above in connection with Figure 3. Furthermore, when the priority of at least one aperiodic data traffic is higher than that of the periodic traffic, the aperiodic data traffic can also be transmitted in dedicated resources, as described above in connection with Fig. 4.

As Noted, provided that the terminal-side electronic device adopts the second transmission mode before the transmission resources change, considering in this mode, the base station of the original serving cell cannot monitor or know the periodic data traffics from the terminal-side electronic device in advance, in this case, the terminal-side electronic device can communicate with the control-side electronic device, for example, the base station of the target cell, via the RRC connection between the terminal-side electronic device with the additional control-side electronic device, for example, the base station of the original serving cell. Especially, the terminal-side electronic device needs to acquire information about resource configuration via the additional control-side electronic device, for example, the base station of the original serving cell, and when it needs to adopt the first transmission mode for data transmission, the terminal-side electronic device can also transmit relevant information about periodic data traffics to the control-side electronic device, for example, the target base station, via the additional control-side electronic device, for example, the base station of the original serving cell, during which the base station of the original serving cell interacts with the base station of the target cell, and the base station of the original serving cell notifies the terminal-side electronic device of the information about resources allocated by the base station of the target cell.

Fig. 6 is a signaling interaction diagram of the terminal-side electronic device in the RRC_CONNECTED second transmission mode at handover, according to the embodiment of the present disclosure. Among them, when the UE in the RRC_CONNECTED second transmission mode needs to perform handover, and the transmission resource pool of the target cell is different from that of the serving cell, the UE in the RRC_CONNECTED second transmission mode, before the handover, notifies the current serving cell of information about its periodic traffic, such as period, data packet size, etc., which can be transmitted in various ways, such as notifying the current serving cell through BSR, PUCCH, other MAC or higher layer information. Based on the notified information, the current serving cell transmits a resource allocation request to the target cell in order to negotiate with the target cell about the resources allocated to the UE during handover, and the request can be included in the handover request transmitted by the current serving cell to the target cell; the target cell notifies the UE of the resource allocation result through a confirmation message for the handover request, so that the UE can perform handover based on the allocated resources.

As noted, it is only exemplary and optional to notify the traffic data information when the transmission resource pool of the target cell is not the same as that of the serving cell as mentioned in the above implementation . Whether the transmiting resource pool of the target cell is different from the receiving resource pool of the serving cell can be judged by the base station of the current serving cell. According to one implementation, at handover, the UE can directly report the information about data transmission traffic, regardless of whether the transmission resource pool of the target cell is the same as that of the serving cell, and the base station selects whether to carry information about resource configuration in the generated RRCreconfiguation message accordingly. For example, if the resource pools are different, the RRCreconfiguation message of the base station includes the information about resource configuration, such as information about dedicated resources and information about the exceptional resource pools, and is notified to the UE via HO command; If the resource pool is unchanged, the information about resource configuration is not included in the RRCreconfiguation message of the base station, so that if the UE does not find the information about resource configuration in the received HO command, it can use the original transmiting resource pool for handover. According to another implementation, before handover, the UE can inquire the base station of the current serving cell (the base station of a source cell) whether the resource pool configuration of the target cell base station is the same as that of the current base station. If not, the relevant information about specific traffic data is reported to request resource allocation; If they are the same, the resource pool configuration of the current base station is directly used for handover, without reporting the relevant information about the traffic data. Or, if they are the same, only relevant information about specific traffic data, such as periodic traffic data, can be reported, so that dedicated resources can be allocated for such data.

According to an embodiment of the present disclosure, when the terminal-side electronic device adopts the second transmission mode before the transmission resources change, the processing circuit is further configured to select at least one of the first transmission mode and the second transmission mode for data transmission after the switching of transmission resource for the terminal-side electronic device completes and before the channel resources available for the control-side electronic device are detected. As an example, an appropriate transmission mode can be selected for data transmission according to relevant information about data transmission from the terminal-side electronic device, such as reliability requirements, priority, periodicity or aperiodicity of data transmission, as described above.

Especially, when the handover completes (the duration of handover is tens to hundreds of milliseconds), if the UE does not detect any available channel resources (the detection process for a period of 1s in LTE, and such detection process is not specified in NR at present), the UE can only use the resources in the exceptional resource pool until the available channel resources are detected. At this time, considering that the UE and the target cell are already in a RRC_CONNECTED state, the UE can be switched to the first transmission mode or at least use the first transmission mode to transmit data during the period from the completion of handover to the detection of available channels, which can improve the reliability of communication during this period.

According to an embodiment of the present disclosure, the processing circuit is further configured to adopt a first transmission mode for data transmission, which includes at least one of the periodic data traffic and the aperiodic data traffic, wherein for the periodic data traffic, the processing circuit transmits the periodic data traffic by using dedicated resources configured based on the relevant information about the periodic data transmitted by the control-side electronic device to the terminal-side electronic device; and/or wherein, for the aperiodic data traffic, the processing circuit transmits the aperiodic data traffic by using dedicated resources configured based on the information about the aperiodic data transmitted by the control-side electronic device to the terminal-side electronic device. Particularly, at least one of the relevant information about the periodic data traffic and the relevant information about the aperiodic data traffic can be provided by the terminal-side electronic device to the control-side electronic device.

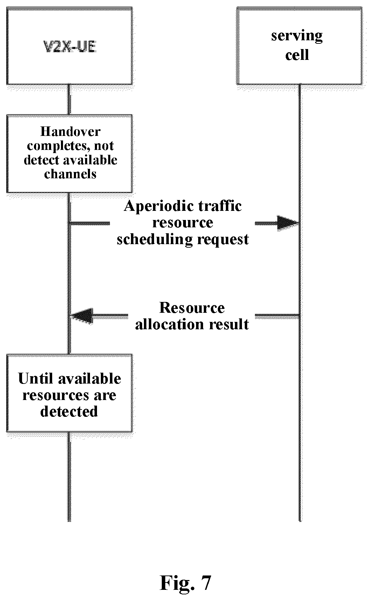

As an example, after the handover completes, the UE can switch to the first transmission mode to transmit data on the configured grant/dynamic grant by the serving cell (the target cell becomes the serving cell after the handover completes). The signaling flow chart of this step is shown in Fig. 7. The UE can request resource allocation from the serving cell by using the established RRC connection with the serving cell, and receive the resource allocation result from the serving cell, so that handover can be performed based on the allocated resources indicated in the resource allocation result.

The resource scheduling request may include relevant information about the periodic data traffic and relevant information about the aperiodic data traffic, and can be provided by the terminal-side electronic device to the control-side electronic device. As an example, after the handover completes, the UE in the RRC_CONNECTED second transmission mode notifies the current serving cell of the information about its periodic traffic such as period, data packet size and so on. The current service cell allocates the UE its corresponding resources for periodic traffic; Of course, if before handover, the UE has notified the target cell of the period and data packet size of its traffic through the serving cell before handover, it is not necessary to report it at this time. Meanwhile, if the UE still has aperiodic traffics, when the data packets of the aperiodic traffics arrive, it can request configuration of corresponding resources in the form of SR report.

It should be pointed out that UE can only report the information about periodic data traffic and use dedicated resources to transmit the periodic data traffic, while the aperiodic data traffic can still be transmitted in the second transmission mode based on available resources selected spontaneously from resource pools (e.g., public resource pools and exceptional resource pools).

According to the embodiment of the present disclosure, the processing circuit can decide whether to switch from the previous transmission mode to a different mode, according to the difference between the transmission resource switching completion time and the channel detection time, the priority and reliability requirements of data traffic, etc. Preferably, when the difference between the transmission resource switching completion time and the channel detection time is less than a certain threshold, and/or when the priority and/or reliability requirements of the traffic are higher than a certain threshold, the mode switching is performed. Especially, when the priority and/or reliability requirements of aperiodic traffic are high, mode switching can be performed.

As an example, after the handover, the UE may continue to maintain the current mode until the available channel resources are detected. Particularly, if the first transmission mode or the combination of the first and second transmission modes is used for handover, the current mode can be maintained after the handover completes.

As an example, after the handover completes, the UE may continue to maintain the second transmission mode, until available channel resources are detected.

The embodiments of the present disclosure are mainly described above for the scenario of handover. It should be pointed out that the above technical scheme can still be equivalently applied to other scenarios in which transmission resources change/switch, and can achieve the same technical effect. It should be pointed out that in different application scenarios, the control-side electronic devices to which the terminal-side electronic devices are connected may be different, so the relevant information about the data transmission configuration may be transmitted and received in different ways and along different paths. The following will exemplarily describe non-handover scenarios, such as a scenario in which the network reconfigures the transmission resource pool.

Particularly, in this case, the terminal-side electronic device can select an appropriate transmission mode for data transmission based on the relevant information about data transmission from the terminal-side electronic device, for example, at least one of the first transmission mode and the second transmission mode can be adopted for data transmission based on at least one of the reliability requirements, priority, specific types, etc. of the data traffic, as specifically described above. It will not be described in detail here. As an example, when the data transmission includes both the periodic data traffic and the aperiodic data traffic, the terminal-side electronic device can use the combination of the first transmission mode and the second transmission mode to transmit data, and when the priority of at least one aperiodic data traffic is higher than that of the periodic data traffic, the aperiodic data traffic can also be transmitted in resources dedicated for the periodic data traffic, as described above, which will not be described in detail here.

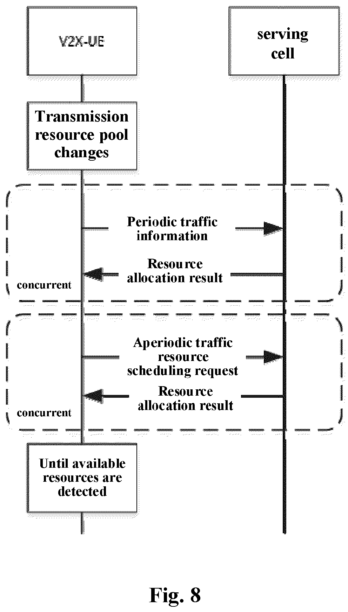

Preferably, considering that in this case, the UE and the cell base station are in RRC_CONNECTED state, the UE can request the cell base station for resource scheduling to configure resources, so as to use the first transmission mode to transmit data based on the configured resources, until new available channel resources are detected. As an example, the resource scheduling request may include relevant information about periodic data traffic and relevant information about aperiodic data traffic, so that resources can be configured for periodic data traffic and aperiodic data traffic respectively for data transmission, as described above. Fig. 8 shows the flow chart of related signaling, in which before starting to switch the transmission resource pool, the UE in the RRC_CONNECTED second transmission mode notifies the serving cell of the information of its periodic traffic such as period, data packet size and so on, while notifying the relevant information about the aperiodic traffic.

As another example, a resource scheduling request can be transmitted only for periodic data traffic, and periodic data traffic can be transmitted by using the configured resources, while aperiodic data traffic can still be transmitted by using available resources selected spontaneously from a resource pool (e.g., common resource pool, exceptional resource pool). As yet another example, the exceptional resource pool can also be used for data transmission in the second transmission mode, until new available channel resources are detected.

According to the embodiment of the present disclosure, the processing circuit can decide whether to switch from the previous transmission mode to a different mode, according to the difference between the transmission resource switching completion time and the channel detection time, the priority and reliability requirements of data traffic, etc., as described above, it will not be described in detail here.

In the structural example of the above device, the processing circuit 120 may be in the form of a general-purpose processor, or may be a dedicated processing circuit, such as an ASIC. For example, the processing circuit 120 can be configured by a circuit (hardware) or a central processing device such as a central processing unit (CPU). In addition, the processing circuit 120 may carry a program (software) for operating the circuit (hardware) or the central processing device. The program can be stored in a memory (such as arranged in the memory) or an external storage medium connected from the outside, and downloaded via a network (such as the Internet).

According to an embodiment of the present disclosure, the processing circuit 120 may include various units for realizing the above functions, a receiving unit 122 configured to receive information about transmission resources configured by the control-side electronic device for data transmission, a selecting unit 124 configured to select an appropriate transmission mode to adopt the configured resources for data transmission according to relevant information about data transmission from the terminal-side electronic device, wherein the selecting unit 124 may also be configured to select the transmission mode adopted during the transmission resources change/switch in consideration of the transmission mode before the transmission resources change/switch; a requesting unit 126 configured to transmit a resource scheduling request to an additional control-side electronic device or the control-side electronic device, wherein the request contains relevant information about data transmission traffic, and a transmiting unit 128 configured to transmit data to the control-side electronic devices in the selected transmiting mode. Each unit can operate as described above, which will not be described in detail here. An unit is drawn by the dashed line to illustrate that the unit is not necessarily included in the processing circuit. As an example, the unit can be in the terminal-side electronic device outside the processing circuit, or even outside the terminal-side electronic device 100. It should be noted that although each unit is shown as a separate unit in Fig. 1, one or more of these units can be combined into one unit or split into multiple units.

It should be noted that each of the above units only belongs to a logical module classified according to the specific function it implements, instead of limiting its specific implementation manner, for example, it can be implemented in software, hardware, or a combination of software and hardware. In an actual implementation, the foregoing units may be implemented as independent physical entities, or may be implemented by a single entity (for example, a processor (CPU or DSP, etc.), an integrated circuit, etc.). Furthermore, that the foregoing units are indicated by dotted lines in the figure indicates that the foregoing units may not actually exist, and the operation / functionality they achieve can be implemented by the processing circuit itself.

It should be understood that Fig. 1 is only a schematic structural configuration of the terminal-side electronic device, and the terminal-side electronic device 100 may also include other possible components (e.g., memory, etc.). Optionally, the control-side electronic device 100 may also include other components not shown, such as a memory, a radio frequency link, a baseband processing unit, a network interface, a processor, a controller, and the like. The processing circuit may be associated with the memory and/or the antennas. For example, the processing circuit may be directly or indirectly (for example, other components may be disposed therebetween) connected to the memory for data access. Also for example, the processing circuit may be directly or indirectly connected to the antennas to transmit radio signals via the communication units and receive radio signals via the communication units.

The memory may store various kinds of information generated by the processing circuit 120 (for example, relevant information about communication condition, configuration information about the terminal-side electronic device, location information, etc.), programs and data for controlling the operation of the terminal-side electronic device, data to be transmitted by the terminal-side electronic device, etc. The memory can also be located inside the terminal-side electronic device but outside the processing circuit, or even outside the terminal-side electronic device. The memory may be a volatile memory and / or a non-volatile memory, for example, the memory may include, but not limited to, random access memory (RAM), dynamic random access memory (DRAM), static random access memory (SRAM), read-only memory (ROM), and flash memory.

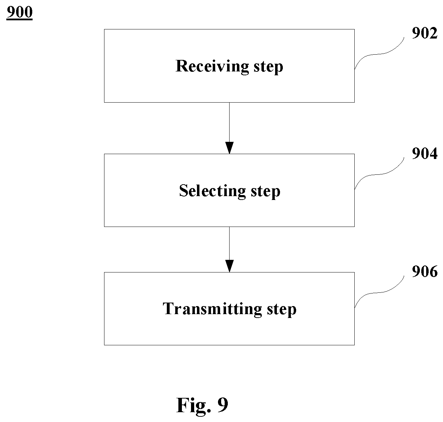

Fig. 9 shows a flowchart of a communication method for a terminal-side electronic device according to an exemplary embodiment of the present disclosure. The method includes a receiving step 902 of receiving information about transmission resources configured by the control-side electronic device for data transmission, a selecting step 904 of selecting an appropriate transmission mode according to relevant information about data transmission of the terminal-side electronic device, and a transmitting step 906 of transmitting data to the control-side electronic device by using the configured resources in the selected transmission mode.

Particularly, the selecting step can also be configured to select the transmission mode adopted during the transmission resources change/switch in consideration of the transmission mode before the transmission resources change/switch.

Preferably, the method may further include a request step of transmitting a resource scheduling request to an additional control-side electronic device or the control-side electronic device, wherein the request contains relevant information about data transmission traffic.

It should be noted that each operation of the method according to the present disclosure can be performed by the above-mentioned terminal-side electronic device, especially by the processing circuit or corresponding processing unit of the terminal-side electronic device, and will not be described in detail here.

According to the technical scheme of the present disclosure, the reliability of data communication when transmission resources change/switch can be improved. Particularly, the reliability of the UE in the RRC_CONNECTED first transmission mode during handover can be improved. Additionally, the reliability of the UE in the RRC_CONNECTED second transmission mode during handover can also be improved. Additionally, it is also possible to improve the reliability of the UE in the RRC_CONNECTED second transmission mode after the handover completes and before the available channel resources are detected. Additionally, it is also possible to improve the reliability of the UE in the RRC_CONNECTED second transmission mode in non-handover scenarios, such as the process of reconfiguring the transmission resource pool. Additionally, it is also possible to improve the reliability of UE in RRC_CONNECTED different transmission modes in other similar scenarios.

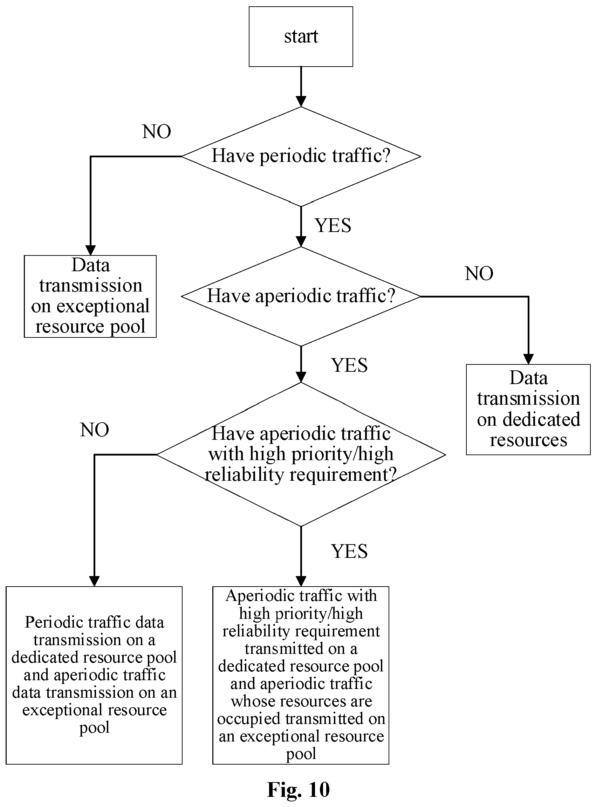

Next, the communication flow chart of the terminal-side electronic device at handover according to the embodiment of the present disclosure will be described in detail with reference to Fig. 10, which shows that the RRC-CONNECTED UE is in the first transmission mode before the handover.

When the UE in RRC_CONNECTED transmission mode 1 needs to perform handover, and the transmission resource pool of the target cell is different from that of the serving cell, it is detected whether there exist periodic data traffic in the data traffic to be performed by the UE, and if there is no periodic data traffic, the data is transmitted through the exceptional resource pool; if there exists periodic data traffic, it is further judged whether there exists aperiodic data traffic. If there is no aperiodic data traffic, it means that there exist only periodic data traffic, which can be transmitted through the dedicated resources configured by the control-side electronic device. If there exist aperiodic data traffic, it is further judged whether there exists aperiodic data traffic with high priority and/or reliability requirements; if there is no aperiodic data traffic with high priority and/or reliability requirements, the dedicated resources and exceptional resource pools can be used to transmit the periodic data traffic and the aperiodic data traffic respectively; if there exists at least one aperiodic data traffic with high priority and/or reliability requirement, the dedicated resources will be used to transmit the at least one aperiodic data traffic, and the periodic data traffic whose resources are occupied will be transmitted by the exceptional resources.

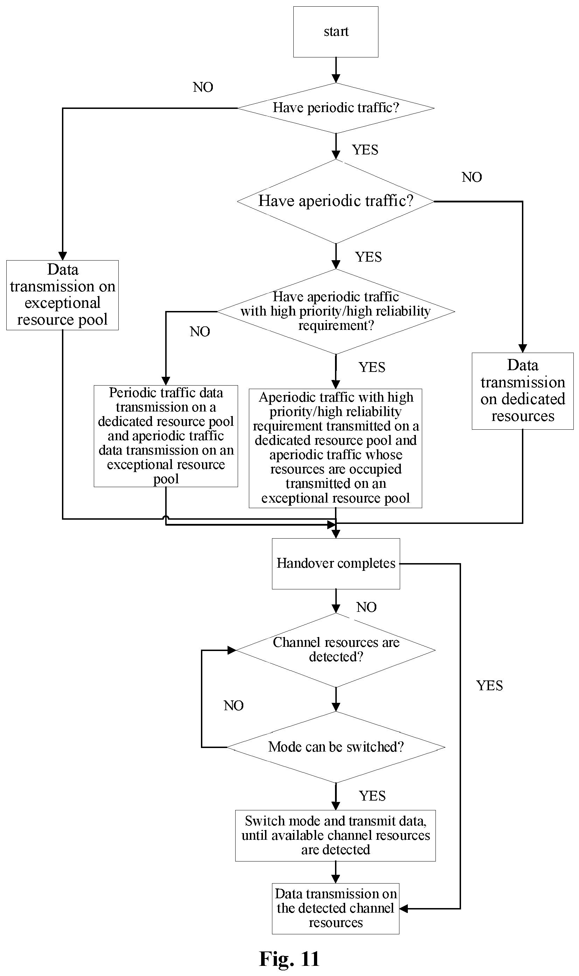

Next, the communication flow chart of the terminal-side electronic device at handover according to the embodiment of the present disclosure will be described in detail with reference to Fig. 11, which shows that the RRC-CONNECTED UE is in the second transmission mode before the handover.

When the UE in RRC_CONNECTED transmission mode 2 needs to perform handover, and the transmission resource pool of the target cell is different from that of the serving cell, it is detected whether there exists periodic data traffic in the data traffic to be performed by the UE, and if there is no periodic data traffic, the data is transmitted through the exceptional resource pool; if there exists periodic data traffic, it is further judged whether there exists aperiodic data traffic. If there is no aperiodic data traffic, it means that there exists only periodic data traffic, which can be transmitted through the dedicated resources configured by the control-side electronic device. If there exists aperiodic data traffic, it is further judged whether there exists aperiodic data traffic with high priority and/or reliability requirement; if there is no aperiodic data traffic with high priority and/or reliability requirement, the dedicated resources and exceptional resource pools are used to transmit the periodic data traffic and the aperiodic data traffic respectively; if there exists at least one aperiodic data traffic with high priority and/or reliability requirement, the dedicated resources will be used to transmit the at least one aperiodic data traffic, and the periodic data traffic whose resources are occupied will be transmitted by the exceptional resources, so that the handover can be performed.

After the handover is successful, it is judged whether available channel resources are detected, and if available channel resources are detected, data is transmitted on the detected channel resources. If the available channel resources are not detected, it is further judged whether the mode switching can be performed. For example, it can be decided whether to switch from the previous transmission mode to a different mode by judging the difference between the transmission resource switching completion time and the channel detection time, the priority and reliability requirements of the data traffic, etc. When it is judged that the mode switching can be performed, an appropriate transmission mode can be selected for data transmission as described above, until the available channel resources are detected, and if the mode switching is not required, the current transmission mode can be maintained until the available channel resources are detected.

The control-side electronic devices in the wireless communication system according to the embodiment of the present disclosure will be described in detail below with reference to the drawings. The control-side electronic device can receive data transmission from a terminal-side electronic device in the wireless communication system, and the electronic device further comprises a processing circuit configured to when the transmission resources for the terminal-side electronic device for data transmission change, provide relevant information about resources shared by the terminal-side electronic device and other terminal-side electronic devices to the terminal-side electronic device; based on relevant information about periodic data transmission from the terminal-side electronic device, provide relevant information about dedicated resources for data transmission to the terminal-side electronic device; the terminal-side electronic device is enabled to select at least one of a first transmission mode and a second transmission mode for data transmission, wherein the first transmission mode has a higher reliability than that of the second transmission mode, and wherein the relevant information about periodic data transmission includes at least one of period, data size of the periodic data traffic.

Particularly, the configured shared resources can refer to an exceptional resource pool for the cell, and the configured dedicated resources can be selected from a normal resource pool for the cell.

According to the embodiment of the present disclosure, the relevant information about the periodic data transmission from the terminal-side electronic device is transmitted by the terminal-side electronic device to the control-side electronic device directly or via an additional control-side electronic device, or known in advance and transmitted by the additional control-side electronic device to the control-side electronic device, or known by the control-side electronic device in advance.

According to an embodiment of the present disclosure, the processing circuit is further configured to provide relevant information about resources for aperiodic data transmission to the terminal-side electronic device according to the relevant information about aperiodic data transmission from the terminal-side electronic device, after the switching of transmission resources of the terminal-side electronic device completes and before the channel resources available for the control-side electronic device are detected.

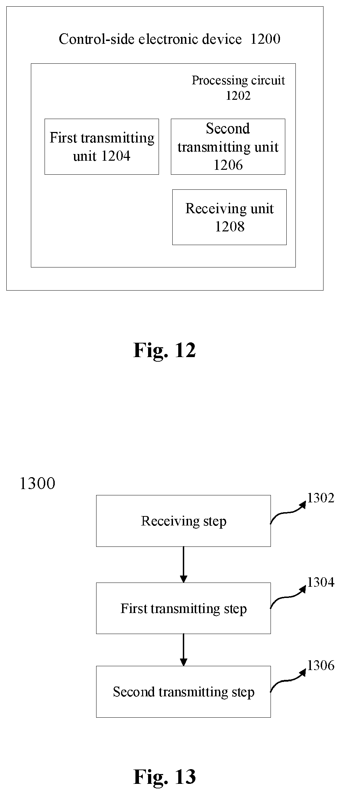

Fig. 12 shows a block diagram of a control-side electronic device 1200 according to an embodiment of the present disclosure. **In** the structural example of the above-mentioned device, the processing circuit 1202 may be in the form of a general-purpose processor or a special-purpose processing circuit, such as an ASIC. For example, the processing circuit 1202 can be configured by a circuit (hardware) or a central processing device such as a central processing unit (CPU). **In** addition, the processing circuit 1202 can carry a program (software) for enabling the circuit (hardware) or the central processing device to work thereon. The program can be stored in a memory (such as arranged in the memory) or an external storage medium connected from the outside, or downloaded via a network (such as the Internet).

According to an embodiment of the present disclosure, the processing circuit 1202 may include various units for realizing the above functions, such as a first transmiting unit 1204 configured to provide relevant information about resources shared by the terminal-side electronic device and other terminal-side electronic devices to the terminal-side electronic device; a second transmitting unit 1206 configured to, based on relevant information about periodic data transmission from the terminal-side electronic device, provide relevant information about dedicated resources for data transmission to the terminal-side electronic device. Preferably, the processing circuit 1202 may further include a receiving unit 1208 configured to receive relevant information about periodic data transmission and/or aperiodic data transmission from the terminal-side electronic device. Each unit can operate as described above, which will not be described in detail here.

It should be noted that each of the above units only belongs to a logical module classified according to the specific function it implements, instead of limiting its specific implementation manner, which will not be described in detail herein. It shall be understood that Fig. 12 is only a schematic structural configuration of the control-side electronic device, and the control-side electronic device 1200 may also include other possible components (e.g., memory, etc.) as described above, which will not be described in detail herein.

Fig. 13 shows a flowchart of a communication method 1300 of a control-side electronic device according to an exemplary embodiment of the present disclosure. The method comprises the following steps: when transmission resources adopted by the terminal-side electronic device for data transmission change, a first transmitting step 1304 of providing relevant information about resources shared by the terminal-side electronic device and other terminal-side electronic devices to the terminal-side electronic device; a second transmitting step 1306 of, based on relevant information about periodic data transmission from the terminal-side electronic device, providing relevant information about dedicated resources for data transmission to the terminal-side electronic device; so that the terminal-side electronic device is enabled to select at least one of a first transmission mode and a second transmission mode for data transmission, wherein the first transmission mode has a higher reliability than that of the second transmission mode, and wherein the relevant information about periodic data transmission includes at least one of period, data size of the periodic data traffic. It should be noted that steps 1304 and 1306 can be executed in parallel or in other order.

Preferably, the method may further include a receiving step 1302 of receiving relevant information about periodic data transmission and/or aperiodic data transmission from the terminal-side electronic device.

It should be pointed out that each step and operation of the control-side electronic device can be executed corresponding to that of the terminal-side electronic device, and will not be described in detail here. Each operation of the method according to the present disclosure can be performed by the above-mentioned control-side electronic device, especially by the processing circuit of the control-side electronic device or its corresponding processing unit, and will not be described in detail here.

It should be pointed out that although V2X is taken as an example to describe the communication method in scenarios in which the transmission resources change/switch, this communication method may also be applied to any scenario where there are terminal-side electronic devices and control-side electronic devices, and the resources allocated by the control-side electronic devices to the terminal-side electronic devices may change/switch, and similar situations also exist in wireless communication scenarios such as unmanned aerial vehicle formation flying, intelligent factory robot cooperative operation, etc. Therefore, the basic technical concepts and technical solutions of this disclosure can also be applied to similar wireless communication scenarios, and can achieve similar technical effects.

### << 5. Application examples >>

**In** this disclosure, an example of a cell handover scenario for V2X is described, but it should be understood that the application scenarios of this disclosure are not so limited. The improved scheme proposed in this disclosure can be applied to any handover application scenario, such as UAV formation flight, intelligent factory robot cooperative operation, etc.

It should be noted that the above description is only exemplary. The disclosed embodiments can also be executed in any other appropriate way, and still achieve the advantageous effects obtained by the disclosed embodiments. Furthermore, the embodiments of the present disclosure can also be applied to other similar application examples, and the advantageous effects obtained by the embodiments of the present disclosure can still be achieved.

It should be understood that the machine-executable instructions in the machine-readable storage medium or program product according to the embodiments of the present disclosure may be configured to perform operations corresponding to the above-mentioned device and method embodiments. When referring to the above device and method embodiments, the embodiments of the machine-readable storage medium or program product are clear to those skilled in the art, and therefore will not be described repeatedly. Machine-readable storage medium and program products for vehiclerying or including the above-mentioned machine-executable instructions also fall within the scope of the present disclosure. Such a storage medium may include, but is not limited to, a floppy disk, an optical disk, a magneto-optical disk, a memory vehicled, a memory stick, and the like.

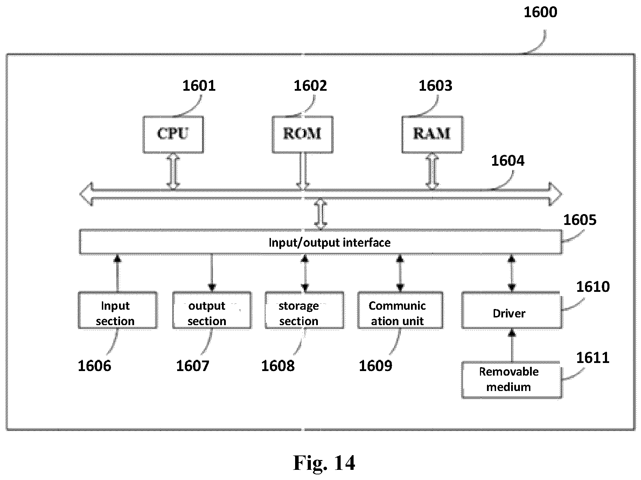

In addition, it should be understood that the processes and devices described above may also be implemented by software and / or firmware. When implemented by software and / or firmware, a program constituting the software is installed from a storage medium or a network to a computer having a dedicated hardware structure, such as a general-purpose personal computer 1600 shown in FIG. 14, and the computer can perform a variety of functions by installing various programs thereon. FIG. 14 is a block diagram illustrating an example structure of a personal computer as an information processing apparatus that can be adopted in an embodiment of the present disclosure. In one example, the personal computer may correspond to the above-described exemplary transmitting device or terminal-side electronic device according to the present disclosure.

In FIG. 14, a central processing unit (CPU) 1601 performs various processes according to a program stored in a read only memory (ROM) 1602 or a program loaded from a storage section 1608 to a random-access memory (RAM) 1603. In the RAM 1603, data required when the CPU 1601 executes various processes and the like is also stored as necessary.

The CPU 1601, the ROM 1602, and the RAM 1603 are connected to each other via a bus 1604. An input / output interface 1605 is also connected to the bus 1604.

The following components are connected to the input / output interface 1605: an input section 1606 including a keyboard, a mouse, etc.; an output section 1607 including a display, such as a cathode ray tube (CRT), a liquid crystal display (LCD), etc., and a speaker, etc.; a storage section 1608 including hard disks, etc.; and communication section 1609 including network interface vehicleds such as LAN vehicleds, modems, etc. The communication section 1609 performs communication processing via a network such as the Internet.

A driver 1610 is also connected to the input / output interface 1605 as needed. A removable medium 1611 such as a magnetic disk, an optical disk, a magneto-optical disk, a semiconductor memory, etc. is installed on the drive 1610 as needed, so that a computer program read out therefrom can be installed into the storage section 1608 as needed.

In a case where the above-mentioned processes are realized by a software, the programs constituting the software are installed from a network such as the Internet or a storage medium such as a removable medium 1611.

Those skilled in the art should understand that such a storage medium is not limited to the removable medium 1611 shown in FIG. 14 in which the program is stored and which is distributed separately from the device to provide the program to the user. Examples of the removable medium 1611 include a magnetic disk (including a floppy disk (registered trademark)), an optical disk (including a CD-ROM and a digital versatile disk (DVD)), and a magneto-optical disk (including a mini disk (MD) (registered trademark))) and semiconductor memory. Alternatively, the storage medium may be the ROM 1602, a hard disk included in the storage section 1608, and the like, in which programs are stored and which are distributed to users along with the device containing them.

The technology of the present disclosure can be applied to various products.

For example, the control-side electronic device according to embodiments of the present disclosure can be implemented as a variety of control devices/base stations, or be included in a variety of control devices/base stations. For example, the transmitting device and terminal device according to embodiments of the present disclosure can be implemented as a variety of terminal devices or be included in a variety of terminal devices.

For example, the control device/base stations mentioned in this disclosure can be implemented as any type of evolved Node B (eNB), such as macro eNB and small eNB. A small eNB may be an eNB covering a cell smaller than a macro cell, such as a pico eNB, a micro eNB, and a home (femto) eNB. Furthermore, for example, the control device/base stations can be implemented as gNB, such as macro gNB and small gNB. A small gNB may be a gNB covering a cell smaller than a macro cell, such as a pico gNB, a micro gNB, and a home (femto) gNB. Alternatively, the base station can be implemented as any other type of base station, such as a NodeB and a Base Transceiver Station (BTS). The base station may include: a main body (also referred to as a base station device) configured to control wireless communication; and one or more remote radio heads (RRHs) disposed at a place different from the main body. In addition, various types of terminals described below can work as base stations by temporarily or semi-persistently performing base station functions.

For example, in some embodiments, the terminal device mentioned in this disclosure can be implemented as a mobile terminal such as a smart phone, a tablet personal computer (PC), a notebook PC, a portable gaming terminal, a portable / dongle Mobile routers and digital cameras, or vehicle terminals such as vehicle navigation equipment. The terminal device can also be implemented as a terminal that performs machine-to-machine (M2M) communication, also called as a machine type communication (MTC) terminal. In addition, the terminal device may be a wireless communication module mounted on each of the terminals described above, such as an integrated circuit module including a single chip.

Examples according to the present disclosure will be described below with reference to the figures.

### [Example of base station]

It should be understood that the term "base station" in this disclosure has the full breadth of its usual meaning and includes at least a wireless communication station that is used as part of a wireless communication system or radio system for facilitating communication. Examples of base stations may be, for example but not limited to, the following: maybe one or both of a base transceiver station (BTS) and a base station controller (BSC) in a GSM system, may be one or both of a radio network controller (RNC) and Node B in a WCDMA system, may be eNBs in LTE and LTE-Advanced systems, or may be corresponding network nodes in future communication systems (such as gNB, eLTE eNB, etc that may appear in 5G communication systems). Part of the functions in the base station of the present disclosure can also be implemented as an entity with control function for communication in D2D, M2M, and V2V communication scenarios, or as an entity that plays a spectrum coordination role in cognitive radio communication scenarios.

### First example

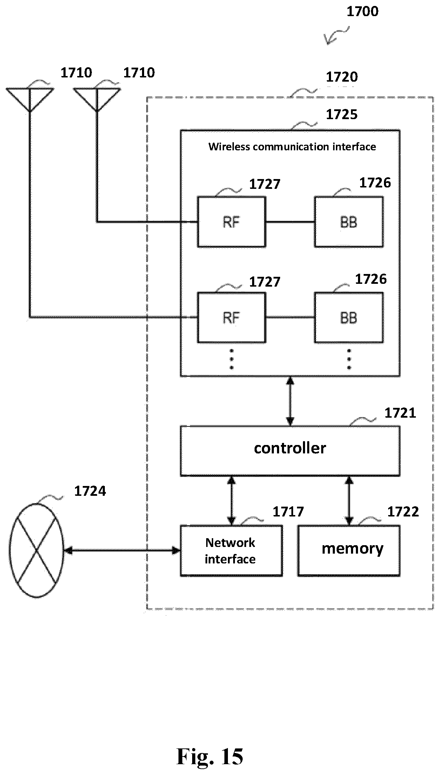

FIG. 15 is a block diagram illustrating a first example of a schematic configuration of a gNB to which the technology of the present disclosure can be applied. The gNB 1700 includes a plurality of antennas 1710 and a base station device 1720. The base station device 1720 and each antenna 1710 may be connected to each other via an RF cable. In an implementation manner, the gNB 1700 (or the base station device 1720) herein may correspond to the above-mentioned control-side electronic device.

Each of the antennas 1710 includes a single or multiple antenna elements, such as multiple antenna elements included in a multiple-input multiple-output (MIMO) antenna, and is used for the base station device 1720 to transmit and receive wireless signals. As shown in FIG. 15, the gNB 1700 may include a plurality of antennas 1710. For example, multiple antennas 1710 may be compatible with multiple frequency bands used by gNB 1700.

The base station device 1720 includes a controller 1721, a memory 1722, a network interface 1717, and a wireless communication interface 1725.

The controller 1721 may be, for example, a CPU or a DSP, and operates various functions of the base station device 1720 at a higher layer. For example, the controller 1721 determines position information about a target terminal device in at least one terminal device on the terminal side of a wireless communication system based on the location information and specific position configuration information about the at least one terminal device acquired via a wireless communication interface 1725. The controller 1721 may have logical functions that perform controls such as radio resource control, radio bearer control, mobility management, admission control, and scheduling. The controls can be performed in conjunction with a nearby gNB or core network node. The memory 1722 includes a RAM and a ROM, and stores a program executed by the controller 1721 and various types of control data such as a terminal list, transmission power data, and scheduling data.

The network interface 1717 is a communication interface for connecting the base station device 1720 to the core network 1724. The controller 1721 may communicate with a core network node or another gNB via the network interface 1717. In this case, the gNB 1700 and the core network node or other gNBs may be connected to each other through a logical interface such as an S1 interface and an X2 interface. The network interface 1717 may also be a wired communication interface or a wireless communication interface for a wireless backhaul line. If the network interface 1717 is a wireless communication interface, compared with the frequency band used by the wireless communication interface 1725, the network interface 1717 can use a higher frequency band for wireless communication.

The wireless communication interface 1725 supports any cellular communication scheme such as Long Term Evolution (LTE) and LTE-Advanced, and provides a wireless connection to a terminal located in a cell of the gNB 1700 via an antenna 1710. The wireless communication interface 1725 may generally include, for example, a baseband (BB) processor 1726 and an RF circuit 1727. The BB processor 1726 may perform, for example, encoding / decoding, modulation / demodulation, and multiplexing / demultiplexing, and execute various types of signal processing in layers such as L1, Medium Access Control (MAC), Radio Link Control (RLC), and Group Data Convergence Protocol (PDCP). As an alternative of the controller 1721, the BB processor 1726 may have a part or all of the above-mentioned logical functions. The BB processor 1726 may be a memory storing a communication control program, or a module including a processor and related circuits configured to execute the program. Updating the program can change the function of the BB processor 1726. The module may be a vehicled or a blade inserted into a slot of the base station device 1720. Alternatively, the module may be a chip mounted on a vehicled or a blade. Meanwhile, the RF circuit 1727 may include, for example, a mixer, a filter, and an amplifier, and transmits and receives a wireless signal via the antenna 1710. Although FIG. 15 illustrates an example in which one RF circuit 1727 is connected to one antenna 1710, the present disclosure is not limited to this illustration, but one RF circuit 1727 may be connected to multiple antennas 1710 at the same time.

As shown in FIG. 15, the wireless communication interface 1725 may include a plurality of BB processors 1726. For example, the plurality of BB processors 1726 may be compatible with multiple frequency bands used by gNB 1700. As shown in FIG. 15, the wireless communication interface 1725 may include a plurality of RF circuits 1727. For example, the plurality of RF circuits 1727 may be compatible with multiple antenna elements. Although FIG. 15 illustrates an example in which the wireless communication interface 1725 includes a plurality of BB processors 1726 and a plurality of RF circuits 1727, the wireless communication interface 1725 may also include a single BB processor 1726 or a single RF circuit 1727.

### Second example

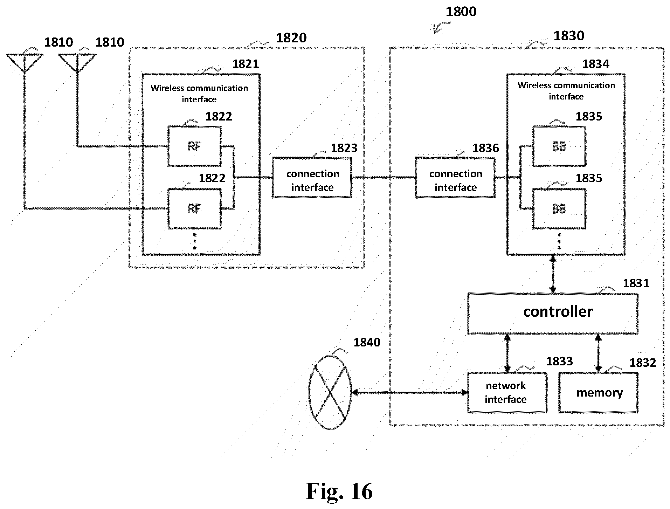

FIG. 16 is a block diagram illustrating a second example of a schematic configuration of a gNB to which the technology of the present disclosure can be applied. The gNB 1800 includes multiple antennas 1810, RRH 1820 and base station equipment 1830. The RRH 1820 and each antenna 1810 may be connected to each other via an RF cable. The base station equipment 1830 and the RRH 1820 may be connected to each other via a high-speed line such as a fiber optic cable. In an implementation manner, the gNB 1800 (or the base station equipment 1830) herein may correspond to the foregoing control-side electronic device.

Each of the antennas 1810 includes a single or multiple antenna elements (such as multiple antenna elements included in a MIMO antenna) and is used for RRH 1820 to transmit and receive wireless signals. As shown in FIG. 16, the gNB 1800 may include multiple antennas 1810. For example, multiple antennas 1810 may be compatible with multiple frequency bands used by gNB 1800.

The base station device 1830 includes a controller 1831, a memory 1832, a network interface 1833, a wireless communication interface 1834, and a connection interface 1836. The controller 1831, the memory 1832, and the network interface 1833 are the same as the controller 1721, the memory 1722, and the network interface 1717 described with reference to FIG. 15.

The wireless communication interface 1834 supports any cellular communication scheme such as LTE and LTE-Advanced, and provides wireless communication to a terminal located in a sector corresponding to the RRH 1820 via the RRH 1820 and the antenna 1810. The wireless communication interface 1834 may typically include, for example, a BB processor 1835. The BB processor 1835 is the same as the BB processor 1726 described with reference to FIG. 15 except that the BB processor 1835 is connected to the RF circuit 1822 of the RRH 1820 via the connection interface 1836. As shown in FIG. 16, the wireless communication interface 1834 may include a plurality of BB processors 1835. For example, multiple BB processors 1835 may be compatible with multiple frequency bands used by gNB 1800. Although FIG. 16 illustrates an example in which the wireless communication interface 1834 includes a plurality of BB processors 1835, the wireless communication interface 1834 may also include a single BB processor 1835.

The connection interface 1836 is an interface for connecting the base station device 1830 (wireless communication interface 1834) to the RRH 1820. The connection interface 1836 may also be a communication module for communication in the above-mentioned high-speed line connecting the base station device 1830 (wireless communication interface 1834) to the RRH 1820.

The RRH 1820 includes a connection interface 1823 and a wireless communication interface 1821.

The connection interface 1823 is an interface for connecting the RRH 1820 (wireless communication interface 1821) to the base station device 1830. The connection interface 1823 may also be a communication module for communication in the above-mentioned high-speed line.

The wireless communication interface 1821 transmits and receives wireless signals via the antenna 1810. The wireless communication interface 1821 may generally include, for example, an RF circuit 1822. The RF circuit 1822 may include, for example, a mixer, a filter, and an amplifier, and transmits and receives wireless signals via the antenna 1810. Although FIG. 16 illustrates an example in which one RF circuit 1822 is connected to one antenna 1810, the present disclosure is not limited to this illustration, but one RF circuit 1822 may be connected to multiple antennas 1810 at the same time.

As shown in FIG. 16, the wireless communication interface 1821 may include a plurality of RF circuits 1822. For example, the plurality of RF circuits 1822 may support multiple antenna elements. Although FIG. 16 illustrates an example in which the wireless communication interface 1821 includes a plurality of RF circuits 1822, the wireless communication interface 1821 may include a single RF circuit 1822.

### [Example of user equipment/terminal device]

### First example

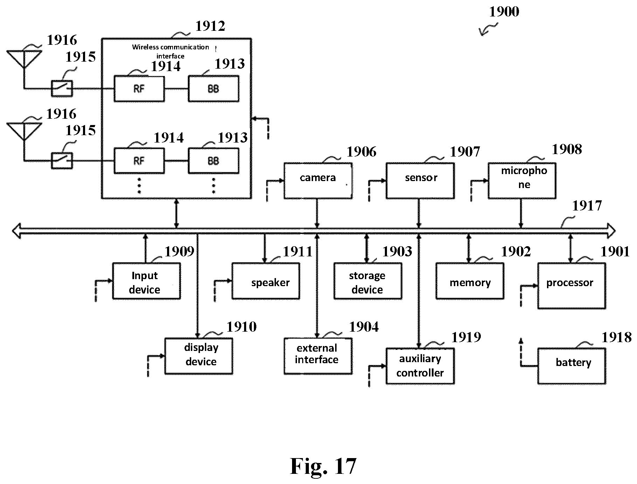

FIG. 17 is a block diagram illustrating an example of a schematic configuration of a communication device 1900, such as smartphone, linker, etc., to which the technology of the present disclosure can be applied. The communication device 1900 includes a processor 1901, a memory 1902, a storage device 1903, an external connection interface 1904, a camera device 1906, a sensor 1907, a microphone 1908, an input device 1909, a display device 1910, a speaker 1911, a wireless communication interface 1912, one or more antenna switches 1915, one or more antennas 1916, a bus 1917, a battery 1918, and an auxiliary controller 1919. In an implementation manner, the communication device 1900 (or the processor 1901) herein may correspond to the foregoing transmitting device or terminal-side electronic device.

The processor 1901 may be, for example, a CPU or a system on chip (SoC), and controls functions of an application layer and another layer of the smartphone 1900. The memory 1902 includes a RAM and a ROM, and stores data and programs executed by the processor 1901. The storage device 1903 may include a storage medium such as a semiconductor memory and a hard disk. The external connection interface 1904 is an interface for connecting external devices such as a memory vehicled and a universal serial bus (USB) device to the smartphone 1900.

The camera device 1906 includes an image sensor such as a charge-coupled device (CCD) and a complementary metal oxide semiconductor (CMOS), and generates a captured image. The sensor 1907 may include a set of sensors such as a measurement sensor, a gyroscope sensor, a geomagnetic sensor, and an acceleration sensor. The microphone 1908 converts a sound input to the smartphone 1900 into an audio signal. The input device 1909 includes, for example, a touch sensor, a keypad, a keyboard, a button, or a switch configured to detect a touch on the screen of the display device 1910, and receives an operation or information input from a user. The display device 1910 includes a screen such as a liquid crystal display (LCD) and an organic light emitting diode (OLED) display, and displays an output image of the smartphone 1900. The speaker 1911 converts an audio signal output from the smartphone 1900 into a sound.

The wireless communication interface 1912 supports any cellular communication scheme such as LTE and LTE-Advanced, and performs wireless communication. The wireless communication interface 1912 may generally include, for example, a BB processor 1913 and an RF circuit 1914. The BB processor 1913 may perform, for example, encoding / decoding, modulation / demodulation, and multiplexing / demultiplexing, and perform various types of signal processing for wireless communication. Meanwhile, the RF circuit 1914 may include, for example, a mixer, a filter, and an amplifier, and transmits and receives wireless signals via the antenna 1916. The wireless communication interface 1912 may be a chip module on which a BB processor 1913 and an RF circuit 1914 are integrated. As shown in FIG. 17, the wireless communication interface 1912 may include multiple BB processors 1913 and multiple RF circuits 1914. Although FIG. 17 illustrates an example in which the wireless communication interface 1912 includes a plurality of BB processors 1913 and a plurality of RF circuits 1914, the wireless communication interface 1912 may also include a single BB processor 1913 or a single RF circuit 1914.

In addition, in addition to the cellular communication scheme, the wireless communication interface 1912 may support other types of wireless communication scheme, such as a short-range wireless communication scheme, a near field communication scheme, and a wireless local area network (LAN) scheme. In this case, the wireless communication interface 1912 may include a BB processor 1913 and an RF circuit 1914 for each wireless communication scheme.

Each of the antenna switches 1915 switches a connection destination of the antenna 1916 between a plurality of circuits included in the wireless communication interface 1912 (for example, circuits for different wireless communication schemes).

Each of the antennas 1916 includes a single or multiple antenna elements, such as multiple antenna elements included in a MIMO antenna, and is used for the wireless communication interface 1912 to transmit and receive wireless signals. As shown in FIG. 17, the smartphone 1900 may include a plurality of antennas 1916. Although FIG. 17 illustrates an example in which the smart phone 1900 includes a plurality of antennas 1916, the smart phone 1900 may also include a single antenna 1916.

In addition, the smartphone 1900 may include an antenna 1916 for each wireless communication scheme. In this case, the antenna switch 1915 may be omitted from the configuration of the smartphone 1900.

The bus 1917 connects the processor 1901, the memory 1902, the storage device 1903, the external connection interface 1904, the camera device 1906, the sensor 1907, the microphone 1908, the input device 1909, the display device 1910, the speaker 1911, the wireless communication interface 1912, and the auxiliary controller 1919 to each other. The battery 1918 supplies power to each block of the smartphone 1900 shown in FIG. 17 via a feeder, and the feeder is partially shown as a dotted line in the figure. The auxiliary controller 1919 operates the minimum necessary functions of the smartphone 1900 in the sleep mode, for example.

### Second example

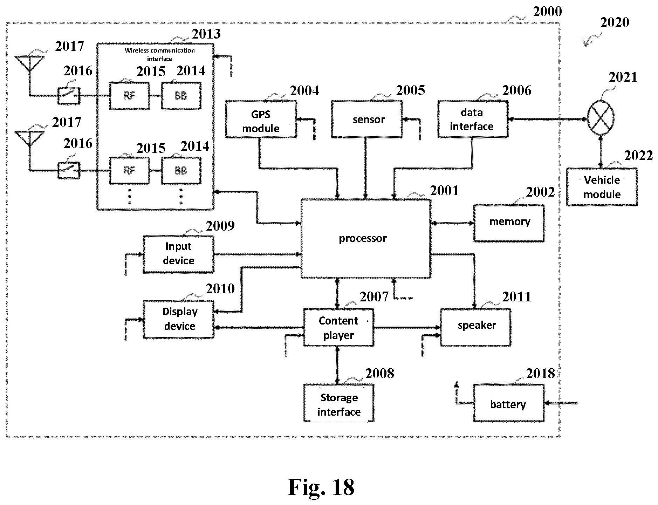

FIG. 18 is a block diagram illustrating an example of a schematic configuration of a vehicle navigation device 2000 to which the technology of the present disclosure can be applied. The vehicle navigation device 2000 includes a processor 2001, a memory 2002, a global location system (GPS) module 2004, a sensor 2005, a data interface 2006, a content player 2007, a storage medium interface 2008, an input device 2009, a display device 2010, a speaker 2011, and a wireless communication interface 2013, one or more antenna switches 2016, one or more antennas 2017, and a battery 2018. In an implementation manner, the vehicle navigation device 2000 (or the processor 2001) herein may correspond to the transmitting device or terminal-side electronic device.

The processor 2001 may be, for example, a CPU or a SoC, and controls navigation functions and other functions of the vehicle navigation device 2000. The memory 2002 includes a RAM and a ROM, and stores data and programs executed by the processor 2001.

The GPS module 2004 uses a GPS signal received from a GPS satellite to measure the position (such as latitude, longitude, and altitude) of the vehicle navigation device 2000. The sensor 2005 may include a set of sensors such as a gyroscope sensor, a geomagnetic sensor, and an air pressure sensor. The data interface 2006 is connected to, for example, an in-vehicle network 2021 via a terminal not shown, and acquires data (such as vehicle speed data) generated by the vehicle.

The content player 2007 reproduces content stored in a storage medium such as a CD and a DVD, which is inserted into the storage medium interface 2008. The input device 2009 includes, for example, a touch sensor, a button, or a switch configured to detect a touch on the screen of the display device 2010, and receives an operation or information input from a user. The display device 2010 includes a screen such as an LCD or OLED display, and displays an image of a navigation function or reproduced content. The speaker 2011 outputs the sound of the navigation function or the reproduced content.

The wireless communication interface 2013 supports any cellular communication scheme such as LTE and LTE-Advanced, and performs wireless communication. The wireless communication interface 2013 may generally include, for example, a BB processor 2014 and an RF circuit 2015. The BB processor 2014 may perform, for example, encoding / decoding, modulation / demodulation, and multiplexing / demultiplexing, and perform various types of signal processing for wireless communication. Meanwhile, the RF circuit 2015 may include, for example, a mixer, a filter, and an amplifier, and transmit and receive wireless signals via the antenna 2017. The wireless communication interface 2013 may also be a chip module on which a BB processor 2014 and an RF circuit 2015 are integrated. As shown in FIG. 18, the wireless communication interface 2013 may include a plurality of BB processors 2014 and a plurality of RF circuits 2015. Although FIG. 18 illustrates an example in which the wireless communication interface 2013 includes a plurality of BB processors 2014 and a plurality of RF circuits 2015, the wireless communication interface 2013 may also include a single BB processor 2014 or a single RF circuit 2015.

In addition, in addition to the cellular communication scheme, the wireless communication interface 2013 may support other types of wireless communication scheme, such as a short-range wireless communication scheme, a near field communication scheme, and a wireless LAN scheme. In this case, the wireless communication interface 2013 may include a BB processor 2014 and an RF circuit 2015 for each wireless communication scheme.

Each of the antenna switches 2016 switches the connection destination of the antenna 2017 between a plurality of circuits included in the wireless communication interface 2013, such as circuits for different wireless communication schemes.

Each of the antennas 2017 includes a single or multiple antenna element, such as multiple antenna elements included in a MIMO antenna, and is used for the wireless communication interface 2013 to transmit and receive wireless signals. As shown in FIG. 18, the vehicle navigation device 2000 may include a plurality of antennas 2017. Although FIG. 18 illustrates an example in which the vehicle navigation device 2000 includes a plurality of antennas 2017, the vehicle navigation device 2000 may also include a single antenna 2017.

In addition, the vehicle navigation device 2000 may include an antenna 2017 for each wireless communication scheme. In this case, the antenna switch 2016 may be omitted from the configuration of the vehicle navigation device 2000.

The battery 2018 supplies power to each block of the vehicle navigation device 2000 shown in FIG. 18 via a feeder, and the feeder is partially shown as a dotted line in the figure. The battery 2018 accumulates power provided from the vehicle.

The technology of the present disclosure may also be implemented as a vehicle on-board system (or vehicle) 2020 including one or more of a vehicle navigation device 2000, an in-vehicle network 2021, and a vehicle module 2022. The vehicle module 2022 generates vehicle data such as vehicle speed, engine speed, and failure information, and outputs the generated data to the in-vehicle network 2021.

The exemplary embodiments of the present disclosure have been described with reference to the drawings, but the present disclosure is of course not limited to the above examples. A person skilled in the art may find various alternations and modifications within the scope of the appended claims, and it should be understood that they will naturally fall in the technical scope of the present disclosure.

It should be understood that machine-executable instructions in a machine-readable storage medium or program product according to embodiments of the present disclosure may be configured to perform operations corresponding to the above-described apparatus and method embodiments. When referring to the above-described embodiments of the apparatus and method, the embodiments of the machine-readable storage medium or the program product will be clear to those skilled in the art, so the description will not be repeated. Machine-readable storage media and program products for carrying or including the above-mentioned machine-executable instructions also fall within the scope of this disclosure. Such storage media may include, but are not limited to, floppy disks, optical disks, magneto-optical disks, memory vehicleds, memory sticks, and the like.

**In** addition, it should be understood that the above series of processes and devices can also be realized by software and/or firmware. **In** case of being implemented by software and/or firmware, corresponding programs constituting corresponding software are stored in the storage medium of related devices, and when the programs are executed, various functions can be executed.

For example, a plurality of functions included in one unit in the above embodiments may be implemented by separate devices. Alternatively, multiple functions implemented by multiple units in the above embodiments may be implemented by separate devices, respectively. **In** addition, one of the above functions may be implemented by multiple units. Needless to say, such configurations are included in the technical scope of the present disclosure.

**In** this specification, the steps described in the flowchart include not only processes performed in time series in the described order, but also processes performed in parallel or individually instead of having to be performed in time series. Further, even in the steps processed in a time series, needless to say, the order can be appropriately changed.

## Claims

1. A terminal-side electronic device (100) for wireless communication system, said terminal-side electronic device configured to transmit data to a control-side electronic device (1200) in the wireless communication system, the terminal-side electronic device further comprises a processing circuit (120, 122, 124, 126, 128) configured to:
select at least one of a first transmission mode and a second transmission mode for data transmission based on relevant information about data transmission from the terminal-side electronic device and adopt corresponding transmission resources to carry out data transmission, when transmission resources adopted by the terminal-side electronic device for data transmission changes,
wherein the first transmission mode has a higher reliability than that of the second transmission mode, and
wherein the relevant information includes at least one of type, reliability requirement and priority of data transmission traffics;
wherein in the first transmission mode, the terminal-side electronic device is configured to adopt dedicated resources configured by the control-side electronic device for the terminal-side electronic device to transmit data; and
in the second transmission mode, the terminal-side electronic device is configured to adopt a resource pool allocated by the control-side electronic device and shared by the terminal-side electronic device and other terminal-side electronic devices to transmit data;
wherein the processing circuit is further configured to adopt the first transmission mode for data transmission for at least one of a data transmission traffic with a reliability requirement higher than a specific threshold, a data transmission traffic with a priority higher than a specific threshold, and a periodic data traffic, and
wherein the processing circuit is further configured to adopt the second transmission mode for data transmission for at least one of a data transmission traffic with a reliability requirement lower than a specific threshold, a data transmission traffic with a priority lower than a specific threshold, and an aperiodic data traffic.

2. The terminal-side electronic device of claim 1, wherein the processing circuit is further configured to, when the data transmission includes both periodic data traffics and aperiodic data traffics and at least one of the aperiodic data traffics have high priorities and/or high reliability requirements, transmit the at least one aperiodic data traffic by occupying resources configured for the periodic traffics in the first transmission mode.

3. The terminal-side electronic device of claim 1, wherein the processing circuit is further configured to receive information about transmission resources configured by the control-side electronic device for data transmission, so that data transmission is performed based on the transmission resources.

4. The terminal-side electronic device of claim 1, wherein when the terminal-side electronic device is configured to adopt the second transmission mode before the transmission resources change, the processing circuit is further configured to:
adopt the first transmission mode or the combination of the first and second transmission modes for data transmission when the transmission resources change.

5. The terminal-side electronic device of claim 1, wherein when the terminal-side electronic device is configured to adopt the second transmission mode before the transmission resources change, the processing circuit is further configured to:
select at least one of the first transmission mode and the second transmission mode for data transmission, after switching of transmission resources for the terminal-side electronic device completes and before channel resources available for the control-side electronic device are detected.

6. The terminal-side electronic device of claim 1, wherein the processing circuit is configured to decide whether to switch from the previous transmission mode to a different mode, based on at least one of the difference between the transmission resource switching completion time and the channel detection time, the traffic priority and the reliability requirement,
wherein, when at least one of the difference between the transmission resource switching time and the channel detection time being less than a specific threshold, the traffic priority being higher than a specific threshold, and the reliability being higher than a certain threshold is satisfied, the mode switching is performed.

7. The terminal-side electronic device of claim 1, wherein the processing circuit is further configured to adopt the first transmission mode for data transmission including at least one of a periodic data traffic and an aperiodic data traffic,
wherein, for the periodic data traffic, the processing circuit transmits the periodic data traffic by utilizing dedicated resources configured based on relevant information about the periodic data transmitted by the control-side electronic device to the terminal-side electronic device; and/or
wherein, for the aperiodic data traffic, the processing circuit transmits the aperiodic data traffic by utilizing dedicated resources configured based on relevant information about the aperiodic data transmitted by the control-side electronic device to the terminal-side electronic device.

8. A wirelss communication system comprising a terminal-side electronic device (100) according to claim 1 and a control-side electronic device (1200) for wireless communication, configured to receive data transmission from the terminal-side electronic device in the wireless communication system, the control-side electronic device further comprises a processing circuit (1202, 1204, 1206, 1208) configured to: when transmission resources adopted by the terminal-side electronic device for data transmission change,
provide relevant information about resources shared by the terminal-side electronic device and other terminal-side electronic devices to the terminal-side electronic device;
based on relevant information about periodic data transmission from the terminal-side electronic device, provide relevant information about resources dedicated for data transmission to the terminal-side electronic device.

9. The wireless communication system of claim 8, wherein the relevent information about the periodic data transmission from the terminal-side electronic device is transmitted by the terminal-side electronic device to the control-side electronic device directly or via an additional control-side electronic device, or known in advance and provided by the additional control-side electronic device to the control-side electronic device, or known in advance by the control-side electronic device.

10. The wireless communication system of claim 8, wherein the processing circuit is further configured to:
after switching of transmission resources for the terminal-side electronic device completes and before channel resources available for the control-side electronic device are detected, provide relevant information about the resources for aperiodic data transmission to the terminal-side electronic device based on relevant information about aperiodic data transmission from the terminal-side electronic device.

11. A method (900) for a terminal-side electronic device (100) in a wireless communication system, the terminal-side electronic device capable of transmitting data to a control-side electronic device in the wireless communication system, the method comprises:
when transmission resources adopted by the terminal-side electronic device for data transmission change,
a receiving step (902) of receiving information about transmission resources configured by the control-side electronic device for data communication;
a selecting step (904) of selecting at least one of a first transmission mode and a second transmission mode for data transmission based on relevant information about data transmission from the terminal-side electronic device and adopting corresponding transmission resources to carry out data transmission, wherein the first transmission mode has a higher reliability than that of the second transmission mode, and wherein the relevant information includes at least one of type, reliability requirement and priority of data transmission traffic, and
a transmitting step (906) of performing the data transmission based on the configured transmission resources according to the selected transmission mode;
wherein in the first transmission mode, the terminal-side electronic device adopts dedicated resources configured by the control-side electronic device for the terminal-side electronic device to transmit data; and
in the second transmission mode, the terminal-side electronic device adopts a resource pool allocated by the control-side electronic device and shared by the terminal-side electronic device and other terminal-side electronic devices to transmit data;
wherein the method comprises a step of adopting the first transmission mode for data transmission for at least one of a data transmission traffic with a reliability requirement higher than a specific threshold, a data transmission traffic with a priority higher than a specific threshold, and a periodic data traffic, and
a step of adopting the second transmission mode for data transmission for at least one of a data transmission traffic with a reliability requirement lower than a specific threshold, a data transmission traffic with a priority lower than a specific threshold, and an aperiodic data traffic

12. A non-transitory computer-readable storage medium storing executable instructions which, when executed, implement the method of claim 11.

## Patentansprüche

1. Endgerätseitige elektronische Vorrichtung (100) für ein drahtloses Kommunikationssystem, wobei die endgerätseitige elektronische Vorrichtung konfiguriert ist, um Daten an eine steuerungsseitige elektronische Vorrichtung (1200) in dem drahtlosen Kommunikationssystem zu übertragen, wobei die endgerätseitige elektronische Vorrichtung ferner eine Verarbeitungsschaltung (120, 122, 124, 126, 128) umfasst, die konfiguriert ist zum:
Auswählen mindestens eines von einem ersten Übertragungsmodus und einem zweiten Übertragungsmodus für eine Datenübertragung basierend auf relevanten Informationen über Datenübertragung von der endgerätseitigen elektronischen Vorrichtung und Übernehmen entsprechender Übertragungsressourcen, um die Datenübertragung vorzunehmen, wenn sich die Übertragungsressourcen ändern, die durch die endgerätseitige elektronische Vorrichtung für die Datenübertragung übernommen werden,
wobei der erste Übertragungsmodus eine höhere Zuverlässigkeit als der zweite Übertragungsmodus aufweist, und
wobei die relevanten Informationen mindestens eines von Typ, Zuverlässigkeitsanforderung und Priorität von Datenübertragungsverkehren einschließen;
wobei in dem ersten Übertragungsmodus, die endgerätseitige elektronische Vorrichtung konfiguriert ist, um vorgesehene Ressourcen zu übernehmen, die durch die steuerungsseitige elektronische Vorrichtung für die endgerätseitige elektronische Vorrichtung konfiguriert werden, um Daten zu übertragen; und
in dem zweiten Übertragungsmodus, die endgerätseitige elektronische Vorrichtung konfiguriert ist, um einen Ressourcenpool zu übernehmen, der durch die steuerungsseitige elektronische Vorrichtung zugewiesen und durch die endgerätseitige elektronische Vorrichtung und andere endgerätseitige elektronische Vorrichtungen gemeinsam genutzt wird, um Daten zu übertragen;
wobei die Verarbeitungsschaltung ferner konfiguriert ist, um den ersten Übertragungsmodus für die Datenübertragung für mindestens einen von einem Datenübertragungsverkehr mit einer Zuverlässigkeitsanforderung, der höher als ein spezifischer Schwellenwert ist, einem Datenübertragungsverkehr mit einer Priorität, die höher als ein spezifischer Schwellenwert ist, und einem periodischen Datenverkehr zu übernehmen, und
wobei die Verarbeitungsschaltung ferner konfiguriert ist, um den zweiten Übertragungsmodus für die Datenübertragung für mindestens einen von einem Datenübertragungsverkehr mit einer Zuverlässigkeitsanforderung, die niedriger als ein spezifischer Schwellenwert ist, einem Datenübertragungsverkehr mit einer Priorität, die niedriger als ein spezifischer Schwellenwert ist, und einem aperiodischen Datenverkehr zu übernehmen.

2. Endgerätseitige elektronische Vorrichtung nach Anspruch 1, wobei die Verarbeitungsschaltung ferner konfiguriert ist, um, wenn die Datenübertragung sowohl periodische Datenverkehre als auch aperiodische Datenverkehre einschließt und mindestens einer der aperiodischen Datenverkehre hohe Prioritäten und/oder hohe Zuverlässigkeitsanforderungen aufweist, den mindestens einen aperiodischen Datenverkehr durch Belegen von Ressourcen zu übertragen, die für die periodischen Datenverkehre in dem ersten Übertragungsmodus konfiguriert sind.

3. Endgerätseitige elektronische Vorrichtung nach Anspruch 1, wobei die Verarbeitungsschaltung ferner konfiguriert ist, um Informationen über Übertragungsressourcen zu empfangen, die durch die steuerseitige elektronische Vorrichtung für die Datenübertragung konfiguriert werden, sodass die Datenübertragung basierend auf den Übertragungsressourcen durchgeführt wird.

4. Endgerätseitige elektronische Vorrichtung nach Anspruch 1, wobei, wenn die endgerätseitige elektronische Vorrichtung konfiguriert ist, um den zweiten Übertragungsmodus zu übernehmen, bevor sich die Übertragungsressourcen ändern, die Verarbeitungsschaltung ferner konfiguriert ist zum:
Übernehmen des ersten Übertragungsmodus oder der Kombination aus dem ersten und dem zweiten Übertragungsmodus für die Datenübertragung, wenn sich die Übertragungsressourcen ändern.

5. Endgerätseitige elektronische Vorrichtung nach Anspruch 1, wobei, wenn die endgerätseitige elektronische Vorrichtung konfiguriert ist, um den zweiten Übertragungsmodus zu übernehmen, bevor sich die Übertragungsressourcen ändern, die Verarbeitungsschaltung ferner konfiguriert ist zum:
Auswählen mindestens einen von dem ersten Übertragungsmodus und dem zweiten Übertragungsmodus für die Datenübertragung, nachdem ein Umschalten der Übertragungsressourcen für die endgerätseitige elektronische Vorrichtung abgeschlossen ist und bevor für die steuerseitige elektronische Vorrichtung verfügbare Kanalressourcen erkannt werden.

6. Endgerätseitige elektronische Vorrichtung nach Anspruch 1, wobei die Verarbeitungsschaltung konfiguriert ist, um, basierend auf mindestens einem von dem Unterschied zwischen der Übertragungsressourcenumschaltabschlusszeit und der Kanalerkennungszeit, der Verkehrspriorität und der Zuverlässigkeitsanforderung, zu entscheiden, ob von dem vorherigen Übertragungsmodus in einen unterschiedlichen Modus umgeschaltet werden soll,
wobei, wenn mindestens eines von dem Unterschied zwischen Übertragungsressourcenumschaltzeit und der Kanalerkennungszeit, die niedriger als ein spezifischer Schwellenwert ist, und der Verkehrspriorität, die höher als ein spezifischer Schwellenwert ist, und der Zuverlässigkeit, die höher als ein spezifischer Schwellenwert ist, das Modusumschalten durchgeführt wird.

7. Endgerätseitige elektronische Vorrichtung nach Anspruch 1, wobei die Verarbeitungsschaltung ferner konfiguriert ist, um den ersten Übertragungsmodus für die Datenübertragung zu übernehmen, die mindestens eines von dem periodischen Datenverkehr und einem aperiodischen Datenverkehr einschließt,
wobei, für den periodischen Datenverkehr, die Verarbeitungsschaltung den periodischen Datenverkehr durch Nutzen vorgesehener Ressourcen überträgt, die basierend auf relevanten Informationen über die periodischen Daten konfiguriert sind, die durch die steuerungsseitige elektronische Vorrichtung an die endgerätseitige elektronische Vorrichtung übertragen werden; und/oder
wobei, für den aperiodischen Datenverkehr, die Verarbeitungsschaltung den aperiodischen Datenverkehr durch Nutzen vorgesehener Ressourcen überträgt, die basierend auf relevanten Informationen über die aperiodischen Daten konfiguriert sind, die durch die steuerungsseitige elektronische Vorrichtung an die endgerätseitige elektronische Vorrichtung übertragen werden.

8. Drahtloses Kommunikationssystem, umfassend eine endgerätseitige elektronische Vorrichtung (100) nach Anspruch 1 und eine steuerseitige elektronische Vorrichtung (1200) für die drahtlosen Kommunikation, das konfiguriert ist, um die Datenübertragung von der endgerätseitigen elektronischen Vorrichtung in dem drahtlosen Kommunikationssystem zu empfangen, wobei die steuerseitige elektronische Vorrichtung ferner eine Verarbeitungsschaltung (1202, 1204, 1206, 1208) umfasst, die konfiguriert ist zum: wenn sich Übertragungsressourcen ändern, die durch die endgerätseitige elektronische Vorrichtung für die Datenübertragung übernommen werden,
Bereitstellen von relevanten Informationen über Ressourcen, die durch die endgerätseitige elektronische Vorrichtung und andere endgerätseitige elektronische Vorrichtungen gemeinsam genutzt werden, an die endgerätseitige elektronische Vorrichtung;
basierend auf relevanten Informationen über die periodische Datenübertragung von der endgerätseitigen elektronischen Vorrichtung, Bereitstellen relevanter Informationen über Ressourcen, die für die Datenübertragung an die endgerätseitige elektronische Vorrichtung vorgesehen sind.

9. Drahtloses Kommunikationssystem nach Anspruch 8, wobei die relevanten Informationen über die periodische Datenübertragung von der endgerätseitigen elektronischen Vorrichtung durch die endgerätseitige elektronische Vorrichtung direkt oder über eine zusätzliche steuerseitige elektronische Vorrichtung an die steuerseitige elektronische Vorrichtung übertragen werden oder im Voraus bekannt sind und durch die zusätzliche steuerseitige elektronische Vorrichtung an die steuerseitige elektronische Vorrichtung bereitgestellt werden oder der steuerseitigen elektronischen Vorrichtung im Voraus bekannt sind.

10. Drahtloses Kommunikationssystem nach Anspruch 8, wobei die Verarbeitungsschaltung ferner konfiguriert ist zum:
nachdem das Umschalten der Übertragungsressourcen für die endgerätseitige elektronische Vorrichtung abgeschlossen ist und bevor für die steuerseitige elektronische Vorrichtung verfügbare Kanalressourcen erkannt werden, Bereitstellen relevanter Informationen über die Ressourcen für die aperiodische Datenübertragung an die endgerätseitige elektronische Vorrichtung basierend auf relevanten Informationen über die aperiodische Datenübertragung von der endgerätseitigen elektronischen Vorrichtung.

11. Verfahren (900) für eine endgerätseitige elektronische Vorrichtung (100) in einem drahtlosen Kommunikationssystem, wobei die endgerätseitige elektronische Vorrichtung in der Lage ist, Daten an eine steuerungsseitige elektronische Vorrichtung in dem drahtlosen Kommunikationssystem zu übertragen, das Verfahren umfasst:
wenn sich die Übertragungsressourcen ändern, die durch die endgerätseitige elektronische Vorrichtung für die Datenübertragung übernommen werden,
einen Empfangsschritt (902) des Empfangens von Informationen über Übertragungsressourcen, die durch die steuerungsseitige elektronische Vorrichtung für die Datenkommunikation konfiguriert werden;
einen Auswahlschritt (904) des Auswählens mindestens einen von einem ersten Übertragungsmodus und einem zweiten Übertragungsmodus für die Datenübertragung basierend auf relevanten Informationen über die Datenübertragung von der endgerätseitigen elektronischen Vorrichtung und zum Übernehmen entsprechender Übertragungsressourcen, um die Datenübertragung vorzunehmen, wobei der erste Übertragungsmodus eine höhere Zuverlässigkeit als der zweite Übertragungsmodus aufweist und wobei die relevanten Informationen mindestens eines von Typ, Zuverlässigkeitsanforderung und Priorität des Datenübertragungsverkehrs einschließen, und
einen Übertragungsschritt (906) des Durchführens der Datenübertragung basierend auf den konfigurierten Übertragungsressourcen gemäß dem ausgewählten Übertragungsmodus;
wobei in dem ersten Übertragungsmodus, die endgerätseitige elektronische Vorrichtung vorgesehene Ressourcen übernimmt, die durch die steuerungsseitige elektronische Vorrichtung für die endgerätseitige elektronische Vorrichtung konfiguriert werden, um Daten zu übertragen; und
in dem zweiten Übertragungsmodus, die endgerätseitige elektronische Vorrichtung einen Ressourcenpool übernimmt, der durch die steuerungsseitige elektronische Vorrichtung zugewiesen und durch die endgerätseitige elektronische Vorrichtung und andere endgerätseitige elektronische Vorrichtungen gemeinsam genutzt wird, um Daten zu übertragen;
wobei das Verfahren einen Schritt des Übernehmens des ersten Übertragungsmodus für die Datenübertragung für mindestens einen von dem Datenübertragungsverkehr mit einer Zuverlässigkeitsanforderung, die höher als ein spezifischer Schwellenwert ist, einem Datenübertragungsverkehr mit einer Priorität, die höher als ein spezifischer Schwellenwert ist, und einen periodischen Datenverkehr umfasst, und
einen Schritt des Übernehmens des zweiten Übertragungsmodus für die Datenübertragung für mindestens einen von einem Datenübertragungsverkehr mit einer Zuverlässigkeitsanforderung, die niedriger als ein spezifischer Schwellenwert ist, einem Datenübertragungsverkehr mit einer Priorität, die niedriger als ein spezifischer Schwellenwert ist, und einem aperiodischen Datenverkehr

12. Nichtflüchtiges computerlesbares Speicherungsmedium, das computerausführbare Anweisungen speichert, die, wenn sie ausgeführt werden, das Verfahren nach Anspruch 11 implementieren.

## Revendications

1. Dispositif électronique côté terminal (100) pour un système de communication sans fil, ledit dispositif électronique côté terminal étant configuré pour transmettre des données à un dispositif électronique côté commande (1200) dans le système de communication sans fil, le dispositif électronique côté terminal comprend en outre un circuit de traitement (120, 122, 124, 126, 128) configuré pour :
sélectionner au moins l'un parmi un premier mode de transmission et un second mode de transmission pour la transmission de données sur la base d'informations pertinentes concernant la transmission de données à partir du dispositif électronique côté terminal et adopter des ressources de transmission correspondantes pour effectuer la transmission de données, lorsque les ressources de transmission adoptées par le dispositif électronique côté terminal pour la transmission de données changent,
dans lequel le premier mode de transmission a une fiabilité supérieure à celle du second mode de transmission, et
dans lequel les informations pertinentes comportent au moins l'un parmi un type, une exigence de fiabilité et une priorité de trafics de transmission de données ;
dans lequel, dans le premier mode de transmission, le dispositif électronique côté terminal est configuré pour adopter des ressources dédiées configurées par le dispositif électronique côté commande pour la transmission de données par le dispositif électronique côté terminal ; et
dans le second mode de transmission, le dispositif électronique côté terminal est configuré pour adopter un groupe de ressources attribué par le dispositif électronique côté commande et partagé par le dispositif électronique côté terminal et d'autres dispositifs électroniques côté terminal pour transmettre des données ;
dans lequel le circuit de traitement est en outre configuré pour adopter le premier mode de transmission pour la transmission de données pour au moins l'un parmi un trafic de transmission de données avec une exigence de fiabilité supérieure à un seuil spécifique, un trafic de transmission de données avec une priorité supérieure à un seuil spécifique, et un trafic de données périodique, et
dans lequel le circuit de traitement est en outre configuré pour adopter le second mode de transmission pour la transmission de données pour au moins l'un parmi un trafic de transmission de données avec une exigence de fiabilité inférieure à un seuil spécifique, un trafic de transmission de données avec une priorité inférieure à un seuil spécifique et un trafic de données apériodique.

2. Dispositif électronique côté terminal selon la revendication 1, dans lequel le circuit de traitement est en outre configuré pour, lorsque la transmission de données comporte à la fois des trafics de données périodiques et des trafics de données apériodiques et qu'au moins l'un parmi les trafics de données apériodiques a des priorités élevées et/ou des exigences de fiabilité élevées, transmettre l'au moins un trafic de données apériodique en occupant des ressources configurées pour les trafics périodiques dans le premier mode de transmission.

3. Dispositif électronique côté terminal selon la revendication 1, dans lequel le circuit de traitement est en outre configuré pour recevoir des informations concernant des ressources de transmission configurées par le dispositif électronique côté commande pour la transmission de données, de sorte que la transmission de données est réalisée sur la base des ressources de transmission.

4. Dispositif électronique côté terminal selon la revendication 1, dans lequel, lorsque le dispositif électronique côté terminal est configuré pour adopter le second mode de transmission avant le changement de ressources de transmission, le circuit de traitement est en outre configuré pour :
adopter le premier mode de transmission ou la combinaison des premier et second modes de transmission pour la transmission de données lorsque les ressources de transmission changent.

5. Dispositif électronique côté terminal selon la revendication 1, dans lequel, lorsque le dispositif électronique côté terminal est configuré pour adopter le second mode de transmission avant le changement de ressources de transmission, le circuit de traitement est en outre configuré pour :
sélectionner au moins l'un parmi le premier mode de transmission et le second mode de transmission pour la transmission de données, après l'achèvement de la commutation des ressources de transmission pour le dispositif électronique côté terminal et avant la détection des ressources de canal disponibles pour le dispositif électronique côté commande.

6. Dispositif électronique côté terminal selon la revendication 1, dans lequel le circuit de traitement est configuré pour décider de commuter ou non du mode de transmission précédent à un mode différent, sur la base d'au moins l'une parmi la différence entre le temps d'achèvement de commutation de ressources de transmission et le temps de détection de canal, la priorité du trafic et l'exigence de fiabilité,
dans lequel, la commutation de mode est réalisée lorsqu'au moins l'une parmi la différence entre le temps de commutation de ressources de transmission et le temps de détection de canal est inférieure à un seuil spécifique, la priorité du trafic est supérieure à un seuil spécifique et la fiabilité est supérieure à un certain seuil est satisfaite.

7. Dispositif électronique côté terminal selon la revendication 1, dans lequel le circuit de traitement est en outre configuré pour adopter le premier mode de transmission pour la transmission de données comportant au moins l'un parmi un trafic de données périodique et un trafic de données apériodique,
dans lequel, pour le trafic de données périodique, le circuit de traitement transmet le trafic de données périodique en utilisant des ressources dédiées configurées sur la base d'informations pertinentes concernant les données périodiques transmises par le dispositif électronique côté commande au dispositif électronique côté terminal ; et/ou
dans lequel, pour le trafic de données apériodiques, le circuit de traitement transmet le trafic de données apériodiques en utilisant des ressources dédiées configurées sur la base d'informations pertinentes concernant les données apériodiques transmises par le dispositif électronique côté commande au dispositif électronique côté terminal.

8. Système de communication sans fil comprenant un dispositif électronique côté terminal (100) selon la revendication 1 et un dispositif électronique côté commande (1200) pour une communication sans fil configuré pour recevoir une transmission de données à partir du dispositif électronique côté terminal dans le système de communication sans fil, le dispositif électronique côté commande comprend en outre un circuit de traitement (1202, 1204, 1206, 1208) configuré pour : lorsque les ressources de transmission adoptées par le dispositif électronique côté terminal pour la transmission de données changent,
fournir au dispositif électronique côté terminal des informations pertinentes concernant des ressources partagées par le dispositif électronique côté terminal et d'autres dispositifs électroniques côté terminal ;
sur la base d'informations pertinentes concernant la transmission de données périodique à partir du dispositif électronique côté terminal, fournir des informations pertinentes concernant les ressources dédiées à la transmission de données au dispositif électronique côté terminal.

9. Système de communication sans fil selon la revendication 8, dans lequel les informations pertinentes concernant la transmission de données périodique à partir du dispositif électronique côté terminal sont transmises par le dispositif électronique côté terminal au dispositif électronique côté commande directement ou par l'intermédiaire d'un dispositif électronique côté commande supplémentaire, ou sont connues à l'avance et fournies par le dispositif électronique côté commande supplémentaire au dispositif électronique côté commande, ou sont connues à l'avance par le dispositif électronique côté commande.

10. Système de communication sans fil selon la revendication 8, dans lequel le circuit de traitement est en outre configuré pour :
après l'achèvement de la commutation de ressources de transmission pour le dispositif électronique côté terminal et avant la détection de ressources de canal disponibles pour le dispositif électronique côté commande, fournir des informations pertinentes concernant les ressources pour la transmission de données apériodique au dispositif électronique côté terminal sur la base d'informations pertinentes concernant la transmission de données apériodique à partir du dispositif électronique côté terminal.

11. Procédé (900) pour un dispositif électronique côté terminal (100) dans un système de communication sans fil, le dispositif électronique côté terminal pouvant transmettre des données à un dispositif électronique côté commande dans le système de communication sans fil, le procédé comprend :
lorsque des ressources de transmission adoptées par le dispositif électronique côté terminal pour la transmission de données changent,
une étape de réception (902) consistant à recevoir des informations concernant des ressources de transmission configurées par le dispositif électronique côté commande pour la communication de données ;
une étape de sélection (904) consistant à sélectionner au moins l'un parmi un premier mode de transmission et un seconde mode de transmission pour la transmission de données sur la base d'informations pertinentes concernant la transmission de données à partir du dispositif électronique côté terminal et à adopter des ressources de transmission correspondantes pour effectuer la transmission de données, dans lequel le premier mode de transmission a une fiabilité supérieure à celle du second mode de transmission, et dans lequel les informations pertinentes comportent au moins l'un parmi un type, une exigence de fiabilité et une priorité du trafic de transmission de données, et
une étape de transmission (906) consistant à réaliser la transmission de données sur la base des ressources de transmission configurées selon le mode de transmission sélectionné ;
dans lequel, dans le premier mode de transmission, le dispositif électronique côté terminal adopte des ressources dédiées configurées par le dispositif électronique côté commande pour la transmission de données par le dispositif électronique côté terminal ; et
dans le second mode de transmission, le dispositif électronique côté terminal adopte un groupe de ressources attribué par le dispositif électronique côté commande et partagé par le dispositif électronique côté terminal et d'autres dispositifs électroniques côté terminal pour transmettre des données ;
dans lequel le procédé comprend une étape consistant à adopter le premier mode de transmission pour la transmission de données pour au moins l'un parmi un trafic de transmission de données avec une exigence de fiabilité supérieure à un seuil spécifique, un trafic de transmission de données avec une priorité supérieure à un seuil spécifique, et un trafic de données périodique, et
une étape consistant à adopter le second mode de transmission pour la transmission de données pour au moins l'un parmi un trafic de transmission de données avec une exigence de fiabilité inférieure à un seuil spécifique, un trafic de transmission de données avec une priorité inférieure à un seuil spécifique, et un trafic de données apériodique

12. Support de stockage non transitoire lisible par ordinateur stockant des instructions exécutables qui, lorsqu'elles sont exécutées, mettent en œuvre le procédé selon la revendication 11.
